# EUROPEAN PATENT APPLICATION

(11) **EP 4 521 194 A1**
(43) Date of publication of application: **12.03.2025**
(21) Application number: 24751210.6
(22) Date of filing: 16.07.2024
(51) Int. Cl.: G06F 1/16, H04M 1/02

(54) **FOLDABLE ELECTRONIC DEVICE COMPRISING HINGE PLATE**

(30) Priority: 19.07.2023 KR 20230093755
(71) Applicant: Samsung Electronics Co., Ltd, Suwon-si, Gyeonggi-do 16677 (KR)
(72) Inventor: NAM, Hosang, Suwon-si, Gyeonggi-do 16677 (KR); SHIM, Yousub, Suwon-si, Gyeonggi-do 16677 (KR); LEE, Hyunggeun, Suwon-si, Gyeonggi-do 16677 (KR); LEE, Jaewoo, Suwon-si, Gyeonggi-do 16677 (KR)
(74) Representative: HGF
(86) International application number: PCT/KR2024/010164
(87) International publication number: WO 2025/018759

(57) **Abstract**

A foldable electronic device according to various embodiments may include a housing including a first housing and a second housing, a flexible display accommodated in the first and second housings, and a hinge assembly configured to connect the first and second housings so that the first and second housings are foldable about a folding axis, in which the hinge assembly includes a hinge module including an arm member configured to rotate about a first rotation axis, and a rotary member configured to rotate about a second rotation axis different from the first rotation axis, a first hinge plate including a first plate part configured to at least partially overlap the hinge module, and a second plate part extending from the first plate part when viewed in a first direction perpendicular to a surface of the flexible display when the foldable electronic device is in an unfolded state, and a buffer member positioned between the flexible display and the first plate part, and in which the first plate part is farther from the flexible display in the first direction than the second plate part from the flexible display.

## Description

### [Technical Field]

Embodiments of the present disclosure (disclosure) relate to a foldable electronic device including a hinge plate.

### [Background Art]

Electronic devices are becoming gradually slimmer to meet the purchase desires of consumers as a functional disparity between manufacturers remarkably decreases. The design factors of the electronic device are being enhanced and improved so that the electronic device has improved rigidity, and the electronic device has distinct functional elements. The electronic device may gradually have various shapes departing from a uniform rectangular shape. For example, the electronic device may have a deformable structure so that a user may conveniently carry the electronic device and use a large screen display when the user uses the electronic device. As the electronic devices, foldable electronic devices are released on the market, and the foldable electronic devices may be required to be lightweight and/or slim in consideration of portability. In addition, operational reliability (e.g., excellent durability) may be required for frequent folding operations.

The information described above may be provided as the related art for the purpose of enhancing the understanding of the present disclosure. No assertion or determination is made with respect to the applicability of any of the above-mentioned as the prior art related to the present disclosure.

### [Disclosure]

### [Technical Problem]

Electronic devices may include a foldable electronic device including a first housing, and a second housing connected to the first housing and configured to be foldable by means of a hinge module (e.g., a hinge structure, a hinge device, or a hinge assembly). The first and second housings are structurally and/or operatively coupled to the hinge module, such that operational reliability for a folded state and/or an unfolded state may be ensured. The foldable electronic device may operate in an in-folding and/or out-folding manner as the first housing rotates within a range of 0 to 360 degrees relative to the second housing by means of the hinge module. The foldable electronic device may include a flexible display disposed to traverse the first and second housings in a state in which the foldable electronic device is unfolded at 180 degrees.

The foldable electronic device may include a metallic first hinge plate (e.g., a first wing plate or a first support plate) and a metallic second hinge plate (e.g., a second wing plate or a second support plate) disposed to be supported by the hinge module on at least a part of the first housing and at least a part of the second housing. The hinge plates are disposed adjacent to each other when the foldable electronic device is in the unfolded state, such that the hinge plates may support the flexible display.

However, the hinge plates made of a metallic material may increase the weight of the electronic device. In addition, the hinge plates made of a metallic material do not smoothly support a bending area of the flexible display, which may cause a durability defect of the flexible display. In case that a plurality of additional subsidiary material layers is stacked to improve the durability of the flexible display, the thickness of the electronic device may increase.

### [Technical Solution]

Various embodiments of the present disclosure may provide a foldable electronic device including a hinge plate capable of assisting in reducing a weight of the device.

Various embodiments may provide a foldable electronic device including a hinge plate capable of assisting in improving durability of a flexible display.

Various embodiments may provide a foldable electronic device including a hinge plate capable of assisting in slimming down the device.

However, the object to be achieved by the present disclosure is not limited to the above-mentioned objects but may be variously expanded without departing from the spirit and scope of the present disclosure.

A foldable electronic device according to various embodiments may include a housing including a first housing and a second housing, a flexible display accommodated in (and/or supported by) the first and second housings, and a hinge assembly configured to connect the first and second housings so that the first and second housings are foldable about a folding axis, in which the hinge assembly includes a hinge module including an arm member configured to rotate about a first rotation axis, and a rotary member configured to rotate about a second rotation axis different from the first rotation axis, a first hinge plate including a first plate part configured to at least partially overlap the hinge module, and a second plate part extending from the first plate part when viewed in a first direction perpendicular to a surface of the flexible display when the foldable electronic device is in an unfolded state, and a buffer member positioned between the flexible display and the first plate part, and in which the first plate part is farther from the flexible display in the first direction than the second plate part from the flexible display.

According to various embodiments, a foldable electronic device may include a first housing, a second housing, a hinge module configured to connect the first and second housings so that the first and second housings are foldable about a folding axis, a flexible display disposed to be supported by the first and second housings, a first hinge plate disposed below the flexible display so as to be supported by the hinge module and including a first plate part and a second plate part extending from the first plate part in a direction away from the folding axis, a second hinge plate disposed below the flexible display so as to be supported by the hinge module and including a third plate part and a fourth plate part extending from the third plate part in the direction away from the folding axis, a first buffer member positioned between the flexible display and the first plate part, and a second buffer member positioned between the flexible display and the second plate part, in which a thickness of the first plate part is smaller than a thickness of the second plate part, and in which a thickness of the third plate part is smaller than a thickness of the fourth plate part.

### [Advantageous Effects]

According to the foldable electronic device according to the exemplary embodiments of the present disclosure, the thickness of the first plate part, which is positioned below the bending area of the flexible display, is at least smaller than the thickness of the second plate part at the periphery, the buffer member is included at the end thereof and disposed to support the flexible display, and the hinge plate at least partially made of a nonmetallic material is included, which may assist in reducing the weight of the device and/or slimming down the device and assist in improving the durability of the flexible display.

In addition, various effects that can be directly or indirectly identified through the present document may be provided.

The effects obtained by the present disclosure are not limited to the aforementioned effects, and other effects, which are not mentioned above, will be clearly understood by those skilled in the art from the following description.

### [Description of Drawings]

In connection with the description of the drawings, the same or similar reference numerals may be used for the same or similar components.
FIG. 1A is a view illustrating a front surface of an electronic device in an unfolded state according to various embodiments of the present disclosure.
FIG. 1B is a view illustrating a rear surface of the electronic device in the unfolded state according to various embodiments of the present disclosure.
FIG. 2A is a view illustrating one side of the electronic device in a folded state according to various embodiments of the present disclosure.
FIG. 2B is a view illustrating the other side of the electronic device in the folded state according to various embodiments of the present disclosure.
FIG. 3 is an exploded perspective view of the electronic device according to various embodiments of the present disclosure.
FIG. 4 is an exploded perspective view of a first display according to various embodiments of the present disclosure.
FIG. 5A is a perspective view of a hinge assembly according to various embodiments of the present disclosure.
FIG. 5B is a top plan view of hinge plates according to various embodiments of the present disclosure.
FIG. 6 is a perspective view of a first hinge module according to various embodiments of the present disclosure.
FIG. 7A is a partially cross-sectional view of the electronic device taken along line 7-7 in FIG. 1A according to various embodiments of the present disclosure.
FIG. 7B is a cross-sectional view illustrating the electronic device and illustrating the arrangement of the hinge plates in the folded state according to various embodiments of the present disclosure.
FIG. 8A is a top plan view of the hinge plates according to various embodiments of the present disclosure.
FIG. 8B is a rear view of the hinge plates according to various embodiments of the present disclosure.
FIG. 8C is a partial perspective view of the hinge plates according to various embodiments of the present disclosure.
FIG. 9A is a partially cross-sectional view of the electronic device including the hinge plates in FIG. 8A according to various embodiments of the present disclosure.
FIG. 9B is a cross-sectional view of the hinge plate taken along line 9b-9b in FIG. 8B according to various embodiments of the present disclosure.
FIG. 10 is a partially cross-sectional view of the electronic device according to various embodiments of the present disclosure.
FIGS. 11A and 11B are partially cross-sectional views illustrating the electronic device and illustrating the arrangement of a buffer member applied to the hinge plate according to various embodiments of the present disclosure.

### [Mode for Disclosure]

Hereinafter, embodiments of the present disclosure will be described in detail with reference to the drawings so that those with ordinary skill in the art to which the present disclosure pertains may easily carry out the embodiments. However, the present disclosure may be implemented in various different ways and is not limited to the embodiments described herein. In connection with the description of the drawings, the identical or similar reference numerals may be used for the identical or similar components. In addition, in the drawings and related description, descriptions of well-known functions and constitution may be omitted for clarity and brevity.

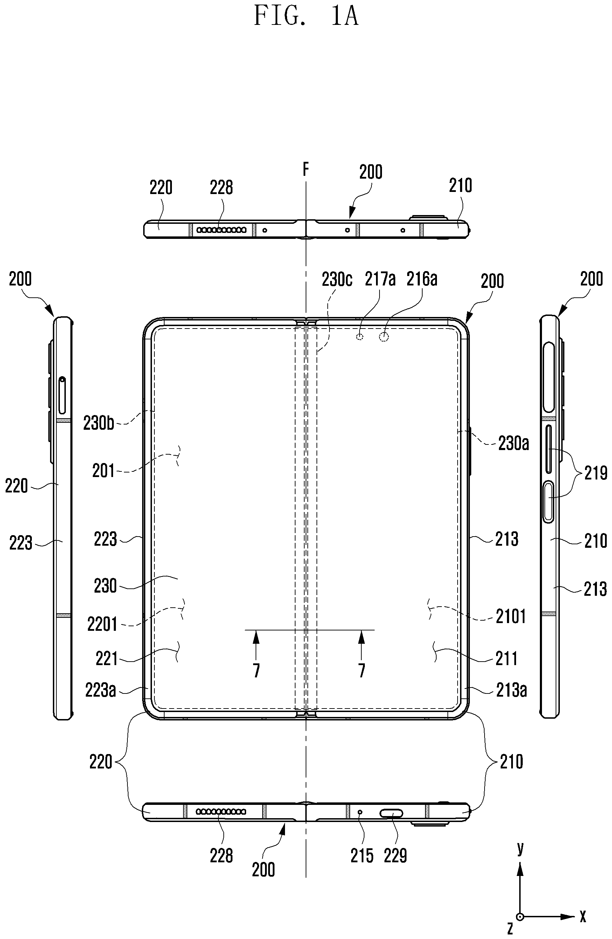

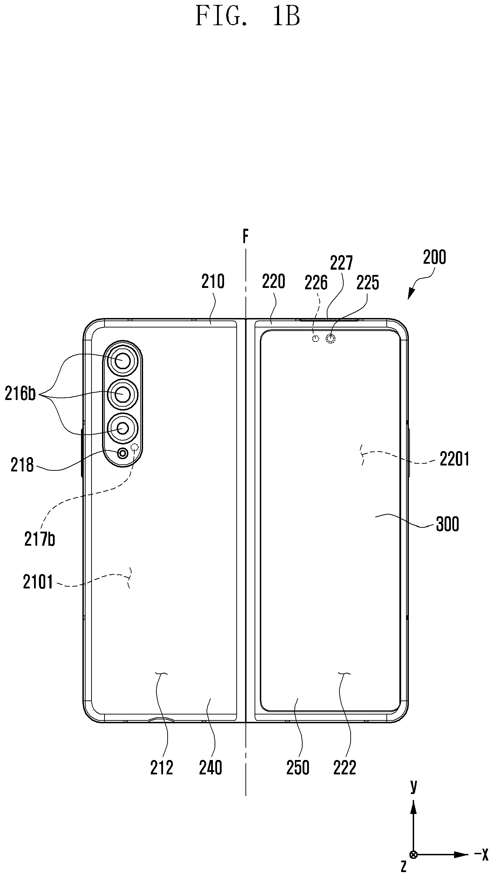

FIG. 1A is a view illustrating a front surface of an electronic device in an unfolded state according to various embodiments of the present disclosure. FIG. 1B is a view illustrating a rear surface of the electronic device in the unfolded state according to various embodiments of the present disclosure.

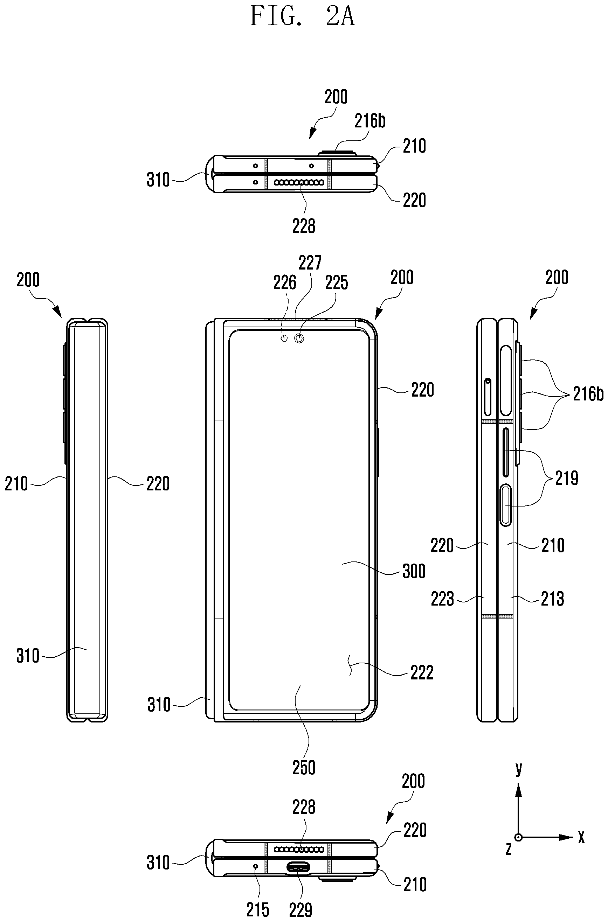

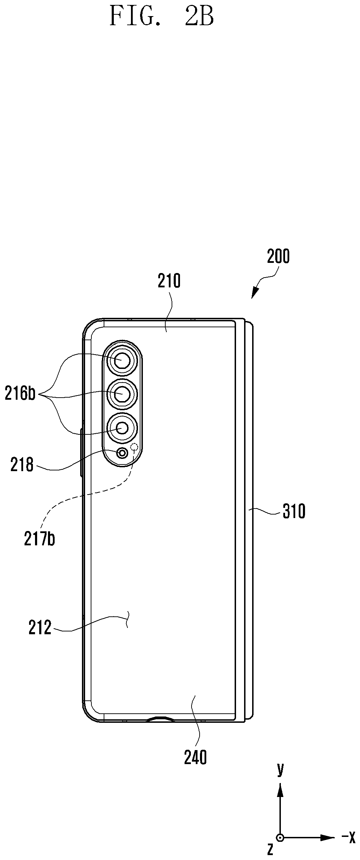

FIG. 2A is a view illustrating one side of the electronic device in a folded state according to various embodiments of the present disclosure. FIG. 2B is a view illustrating the other side of the electronic device in the folded state according to various embodiments of the present disclosure.

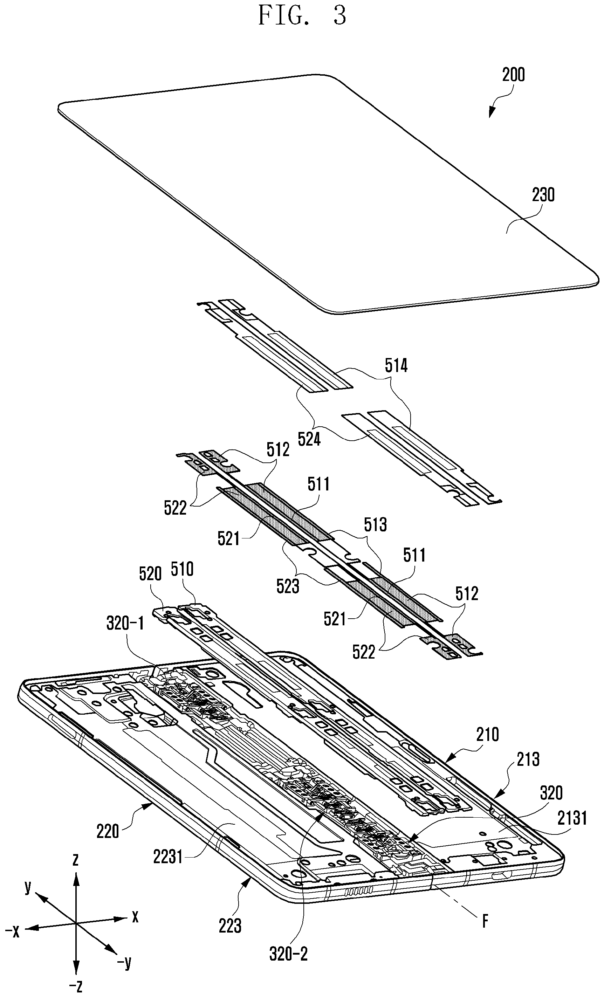

With reference to FIGS. 1A to 2B, an electronic device 200 may include a first housing 210 (e.g., a first housing part or a first housing structure) and a second housing 220 (e.g., a second housing part or a second housing structure) coupled to be rotatable about a folding axis F relative to each other by means of at least one of hinge modules (e.g., hinge modules 320, 320-1, and 320-2 in FIG. 3) (e.g., a hinge device or a hinge structure). In the embodiment, the first housing 210 and the second housing 220 may be configured as a housing (e.g., a foldable housing) of the electronic device 200. In the embodiment, the electronic device 200 may include a first display 230 (e.g., a flexible display, a foldable display, or a main display) disposed to be supported by being accommodated in the first and second housings. In the embodiment, the electronic device 200 may include a second display 300 (e.g., a sub-display) disposed by means of the second housing 220. In the embodiment, the electronic device 200 may include a hinge housing 310 (e.g., a hinge cover). In the unfolded state, the hinge housing 310 may be disposed to be at least partially invisible from the outside by the first housing 210 and the second housing 220. The hinge housing 310 may cover at least one of the hinge modules (e.g., the hinge modules 320, 320-1, and 320-2 in FIG. 3) so that the hinge module is invisible from the outside while the electronic device 200 is in the folded state or is being folded. In the present document, a surface on which the first display 230 is disposed may be defined as a front surface of the electronic device 200, and a surface opposite to the front surface may be defined as a rear surface of the electronic device 200. In addition, a surface, which surrounds a space between the front surface and the rear surface, may be defined as a side surface of the electronic device 200.

According to various embodiments, the first housing 210 and the second housing 220 may be disposed at two opposite sides based on the folding axis F and have an entirely symmetric shape with respect to the folding axis F. The first housing 210 and the second housing 220 may be folded to be consistent with each other. According to any embodiment, the first housing 210 and the second housing 220 may be folded asymmetrically with respect to the folding axis F. In the embodiment, an angle or distance between the first housing 210 and the second housing 220 may vary depending on whether the electronic device 200 is in an unfolded state, a folded state, or an intermediate state.

According to various embodiments, the first housing 210 may include a first surface 211 connected to at least one of the hinge modules (e.g., the hinge modules 320, 320-1, and 320-2 in FIG. 3) and disposed to be directed toward the front surface of the electronic device 200 in the unfolded state, a second surface 212 directed in a direction opposite to the first surface 211, and/or a first lateral member 213 configured to surround at least a part of a first space 2101 between the first surface 211 and the second surface 212. In the embodiment, the second housing 220 may include a third surface 221 connected to at least one of the hinge modules (e.g., the hinge modules 320, 320-1, and 320-2 in FIG. 3) and disposed to be directed toward the front surface of the electronic device 200 in the unfolded state, a fourth surface 222 directed in a direction opposite to the third surface 221, and/or a second lateral member 223 configured to surround at least a part of a second space 2201 between the third surface 221 and the fourth surface 222. In the embodiment, the first surface 211 is directed in substantially the same direction as the third surface 221 in the unfolded state, and the first surface 211 may at least partially face the third surface 221 in the folded state. In the embodiment, the electronic device 200 may also include a recess 201 formed by structurally coupling the first housing 210 and the second housing 220 and configured to accommodate the first display 230. In the embodiment, the recess 201 may have substantially the same size as the first display 230. In the embodiment, the first housing 210 may include a first protective frame 213a (e.g., a first decorative member) coupled to the first lateral member 213, disposed to overlap an edge of the first display 230, and configured to cover the edge of the first display 230 so that the edge of the first display 230 is not visible from the outside when the first display 230 is viewed from above. In the embodiment, the first protective frame 213a may be integrated with the first lateral member 213. In the embodiment, the second housing 220 may include a second protective frame 223a (e.g., a second decorative member) coupled to the second lateral member 223, disposed to overlap an edge of the first display 230, and configured to cover the edge of the first display 230 so that the edge of the first display 230 is not visible from the outside when the first display 230 is viewed from above. In the embodiment, the second protective frame 223a may be integrated with the second lateral member 223. In any embodiment, the first protective frame 213a and the second protective frame 223a may be excluded.

According to various embodiments, the hinge housing 310 (e.g., the hinge cover) may be disposed between the first housing 210 and the second housing 220 and disposed to cover a part of at least one of the hinge modules (e.g., the hinge modules 320, 320-1, and 320-2 in FIG. 3). In the embodiment, the hinge housing 310 may be covered by a part of the first housing 210 and a part of the second housing 220 or exposed to the outside in accordance with whether the electronic device 200 is in the unfolded state, the folded state, or the intermediate state. For example, in case that the electronic device 200 is in the unfolded state, at least a part of the hinge housing 310 may be disposed to be covered by the first housing 210 and the second housing 220 so that at least a part of the hinge housing 310 is substantially invisible from the outside. In the embodiment, in case that the electronic device 200 is in the folded state, at least a part of the hinge housing 310 may be disposed between the first housing 210 and the second housing 220 so that at least a part of the hinge housing 310 is visible from the outside. In the embodiment, in the intermediate state in which the first housing 210 and the second housing 220 define a predetermined angle therebetween (are folded with a certain angle), the hinge housing 310 may be disposed between the first housing 210 and the second housing 220 so that the hinge housing 310 is at least partially visible from the outside of the electronic device 200. For example, an area of the hinge housing 310, which is exposed to the outside, may be smaller than an area of the hinge housing 310 exposed to the outside in the completely folded state. In the embodiment, the hinge housing 310 may include a curved surface.

According to various embodiments, the electronic device 200 may include at least one of at least one of displays 230 and 300 disposed in the first housing 210 and/or the second housing 220, an input device 215, sound output devices 227 and 228, sensor modules 217a, 217b, and 226, camera modules 216a, 216b, and 225, key input devices 219, an indicator (not illustrated), and a connector port 229. In any embodiment, the electronic device 200 may further include at least one of the other constituent elements. In any embodiment, at least one of the above-mentioned constituent elements may be excluded.

According to various embodiments, at least one of the displays 230 and 300 may include the first display 230 (e.g., the flexible display) disposed to be supported by the third surface 221 of the second housing 220 from the first surface 211 of the first housing 210, and the second display 300 disposed in an internal space of the second housing 220 so as to be at least partially visible from the outside through the fourth surface 222. In any embodiment, the second display 300 may also be disposed in an internal space of the first housing 210 so as to be visible from the outside through the second surface 212. In the embodiment, the first display 230 may be mainly used when the electronic device 200 is in the unfolded state, and the second display 300 may be mainly used when the electronic device 200 is in the folded state. In the embodiment, in the intermediate state, the electronic device 200 may control the first display 230 and/or the second display 300 on the basis of a folding angle between the first housing 210 and the second housing 220 so that the first display 230 and/or the second display 300 may be used.

According to various embodiments, the first display 230 may be disposed in an accommodation space defined between the pair of housings 210 and 220. For example, the first display 230 may be disposed in the recess 201 defined by the pair of housings 210 and 220 and disposed to occupy the substantially most part of the front surface of the electronic device 200 in the unfolded state. In the embodiment, the first display 230 may include a flexible display having at least a partial area that may be deformed to a flat or curved surface. In the embodiment, the first display 230 may include a first area 230a corresponding to the first housing 210, and a second area 230b corresponding to the second housing 220. In the embodiment, the first display 230 may include a folding area 230c including a part of the first area 230a and a part of the second area 230b based on the folding axis F. In the embodiment, at least a part of the folding area 230c may include an area corresponding to at least one of the hinge modules (e.g., the hinge modules 320, 320-1, and 320-2 in FIG. 3). In the embodiment, the areas of the first display 230 are merely separated exemplarily by the pair of housings 210 and 220 and at least one of the hinge modules (e.g., the hinge modules 320, 320-1, and 320-2 in FIG. 3), and the first display 230 may be substantially expressed as a single overall seamless screen defined by the pair of housings 210 and 220 and at least one of the hinge modules (e.g., the hinge modules 320, 320-1, and 320-2 in FIG. 3). In the embodiment, the first area 230a and the second area 230b may have an entirely symmetric shape or a partially asymmetric shape based on the folding area 230c and/or the folding axis F.

According to various embodiments, the electronic device 200 may include a first rear surface cover 240 disposed on the second surface 212 of the first housing 210, and a second rear surface cover 250 disposed on the fourth surface 222 of the second housing 220. In any embodiment, at least a part of the first rear surface cover 240 may be integrated with the first lateral member 213. In any embodiment, at least a part of the second rear surface cover 250 may be integrated with the second lateral member 223. In the embodiment, at least one of the first rear surface cover 240 and the second rear surface cover 250 may be provided in the form of a substantially transparent plate (e.g., a glass or polymer plate including various coating layers) or an opaque plate. In the embodiment, for example, the first rear surface cover 240 may be provided in the form of an opaque plate made of coated or tinted glass, ceramic, polymer, metal (e.g., aluminum, stainless steel (STS), or magnesium), or a combination of at least two of the above-mentioned materials. In the embodiment, for example, the second rear surface cover 250 may be provided in the form of a substantially transparent plate made of glass, polymer, or the like. Therefore, the second display 300 may be disposed in the internal space of the second housing 220 so as to be visible from the outside through the second rear surface cover 250.

According to various embodiments, the input device 215 may include a microphone. In any embodiment, the input device 215 may include a plurality of microphones disposed to detect a direction of sound. In the embodiment, the sound output devices 227 and 228 may include speakers. In the embodiment, the sound output devices 227 and 228 may include a telephone receiver 227 disposed by means of the fourth surface 222 of the second housing 220, and an external speaker 228 disposed by means of at least a part of the second lateral member 223 of the second housing 220. In any embodiment, the input device 215, the sound output devices 227 and 228, and the connector 229 may be disposed in spaces of the first housing 210 and/or the second housing 220 and exposed to an external environment through at least one hole formed in the first housing 210 and/or the second housing 220. In any embodiment, the holes formed in the first housing 210 and/or the second housing 220 may be used in common for the input device 215 and the sound output devices 227 and 228. In any embodiment, the sound output devices 227 and 228 may include speakers (e.g., piezoelectric speakers) that operate without holes formed in the first housing 210 and/or the second housing 220.

According to various embodiments, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. In the embodiment, the electronic device 200 may include a flash 218 disposed in the vicinity of the second camera module 216b. In the embodiment, for example, the flash 218 may include a light-emitting diode or a xenon lamp. In the embodiment, the camera modules 216a, 216b, and 225 may each include one lens or a plurality of lenses, an image sensor, and/or an image signal processor. In any embodiment, at least one of the camera modules 216a, 216b, and 225 may include two or more lenses (e.g., a wide-angle lens and a telephoto lens) and image sensors and be disposed together on any one surface of the first housing 210 and/or the second housing 220.

According to various embodiments, the sensor modules 217a, 217b, and 226 may generate electrical signals or data values corresponding to an internal operating state of the electronic device 200 or the external environment state. In the embodiment, the sensor modules 217a, 217b, and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In any embodiment, the sensor modules 217a, 217b, and 226 may include at least one of a gesture sensor, a grip sensor, a color sensor, an infrared (IR) sensor, an illuminance sensor, an ultrasonic sensor, an iris recognition sensor, and a distance detection sensor (e.g., a time-of-flight (TOF) sensor or a LiDAR (light detection and ranging) sensor).

According to various embodiments, the electronic device 200 may further include at least one of the non-illustrated sensor modules, e.g., an atmospheric pressure sensor, a magnetic sensor, a biosensor, a temperature sensor, a humidity sensor, and a fingerprint recognition sensor. In any embodiment, the fingerprint recognition sensor may be disposed by means of at least one of the first lateral member 213 of the first housing 210 and/or the second lateral member 223 of the second housing 220.

According to various embodiments, the key input devices 219 may be disposed to be exposed to the outside through the first lateral member 213 of the first housing 210. In any embodiment, the key input devices 219 may be disposed to be exposed to the outside through the second lateral member 223 of the second housing 220. In any embodiment, the electronic device 200 may exclude some or all of the key input devices 219, and the excluded key input device 219 may be implemented as other types such as a soft key on at least one of the displays 230 and 300. In one embodiment, the key input device 219 may be implemented by using a pressure sensor included in at least one of the displays 230 and 300.

According to various embodiments, the connector port 229 may include a connector (e.g., a USB connector or an interface connector port module (IF module)) configured to transmit or receive power and/or data to or from an external electronic device. In any embodiment, the connector port 229 may serve to transmit or receive audio signals to or from the external electronic device or further include a separate connector port (e.g., an earphone jack hole) for transmitting or receiving audio signals to or from the external electronic device.

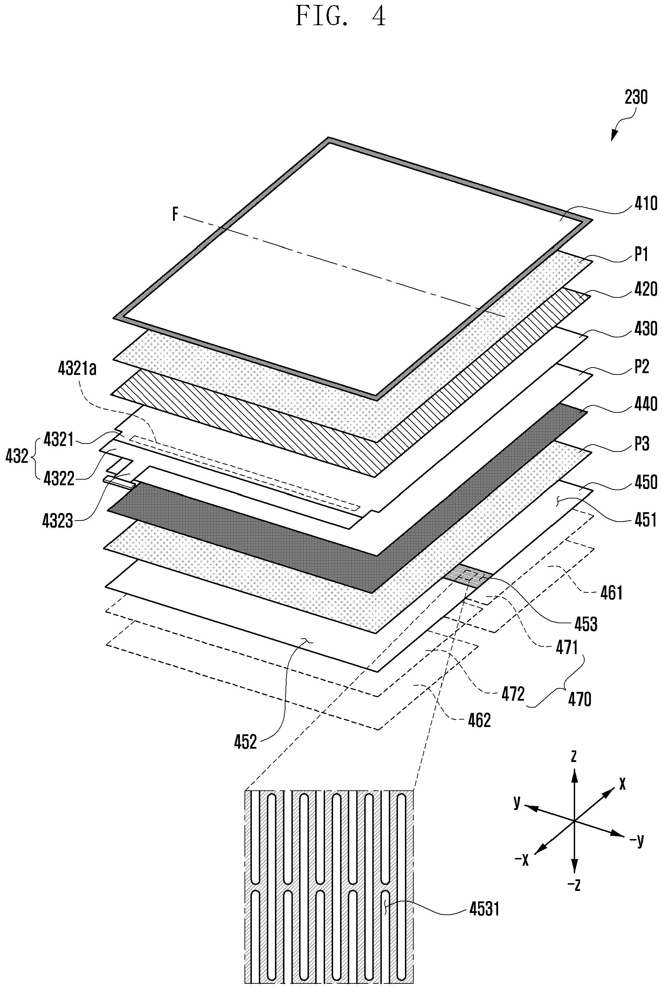

According to various embodiments, at least one of the camera modules 216a and 225 among the camera modules 216a, 216b, and 225, at least one of the sensor modules 217a and 226 among the sensor modules 217a, 217b, and 226, and/or the indicator may be disposed to be visually exposed through at least one of the displays 230 and 300. For example, at least one of the camera modules 216a and 225, at least one of the sensor modules 217a and 226, and/or the indicator may be provided in the internal space of at least one of the housings 210 and 220, disposed below an activation area (display area) of at least one of the displays 230 and 300, and disposed to adjoin the external environment through a transparent area or an opening bored to a cover member (e.g., a window layer 410 in FIG. 4 and/or the second rear surface cover 250). In the embodiment, an area, in which at least one of the displays 230 and 300 faces at least one of the camera modules 216a and 225, may be a part of the area for displaying content and defined as a transmissive area having a predetermined transmittance rate. In the embodiment, the transmissive area may be formed to have a transmittance rate within a range of about 5% to about 20%. The transmissive area may include an area that overlaps an effective area (e.g., a view angle area) of at least one of the camera modules 216a and 225 through which light, which enters an image sensor to create an image, passes. For example, the transmissive area of at least one of the displays 230 and 300 may include an area having a low arrangement density of the pixels than the periphery thereof. For example, the transmissive area may be substituted for the opening. For example, at least one of the camera modules 216a and 225 may include an under-display camera (UDC) or an under-panel camera (UPC). In one embodiment, some of the camera modules 216a and 225 or some of the sensor modules 217a and 226 may be disposed to perform the functions thereof without being visually exposed through the display. For example, an area, which faces the camera modules 216a and 225 and/or the sensor modules 217a and 226 disposed below the displays 230 and 300 (e.g., the display panels), is an under-display camera (UDC) structure that does not require the bored opening.

According to various embodiments, when the electronic device 200 is in the unfolded state (e.g., the state in FIGS. 1A and 1B), the first housing 210 and the second housing 220 may define an angle of about 180 degrees. The first area 230a, the second area 230b, and the folding area 230c of the first display 230 may be disposed on substantially the same plane and directed in the same direction (e.g., a z-axis direction). In one embodiment, in case that the electronic device 200 is in the unfolded state, the first housing 210 may be rotated by an angle of about 360 degrees relative to the second housing 220 and folded reversely so that the second surface 212 and the fourth surface 222 face each other (out-folding manner).

According to various embodiments, in case that the electronic device 200 is in the folded state (e.g., the state in FIGS. 2A and 2B), the first surface 211 of the first housing 210 and the third surface 221 of the second housing 220 may be disposed to face each other. In this case, the first area 230a and the second area 230b of the first display 230 may also be disposed to face each other while defining a narrow angle (e.g., within a range of 0 to about 10 degrees) therebetween by means of the folding area 230c. In the embodiment, at least a part of the folding area 230c may be deformed in a curved shape having a predetermined curvature. In the embodiment, in case that the electronic device 200 is in the intermediate state, the first housing 210 and the second housing 220 may be disposed at a predetermined angle (a certain angle) with respect to each other. In this case, the first area 230a and the second area 230b of the first display 230 may define an angle larger than an angle in the folded state and smaller than an angle in the unfolded state. A curvature of the folding area 230c may be smaller than a curvature in the folded state and larger than a curvature in the unfolded state. In any embodiment, the first housing 210 and the second housing 220 may define an angle by means of at least one of the hinge modules (e.g., the hinge modules 320, 320-1, and 320-2 in FIG. 3) so that the first housing 210 and the second housing 220 may be stopped at a designated folding angle between the folded state and the unfolded state (free stop function). In any embodiment, the first housing 210 and the second housing 220 may operate consistently while being pressed in an unfolding direction or a folding direction based on a designated inflection angle by means of at least one of the hinge modules (e.g., the hinge modules 320, 320-1, and 320-2 in FIG. 3).

FIG. 3 is an exploded perspective view of the electronic device according to various embodiments of the present disclosure.

With reference to FIG. 3, the electronic device 200 may include the first housing 210, the second housing 220, at least one of the hinge modules 320, 320-1, and 320-3, which connects the first housing 210 and the second housing 220 so that the first housing 210 and the second housing 220 are rotatable relative to each other, and the flexible display 230 (e.g., the first display 230 in FIG. 1A) accommodated to be supported by the first housing 210 and the second housing 220. In the embodiment, the first housing 210 may include the first lateral member 213 configured to define at least a part of the side surface and exposed to be visible from the outside of the electronic device 200, and a first support member 2131 extending from the first lateral member 213 to the internal space (e.g., the first space 2101 in FIG. 1A) of the first housing 210. In the embodiment, the second housing 220 may include the second lateral member 223 configured to define at least a part of the side surface and exposed to be visible from the outside of the electronic device 200, and a second support member 2231 extending from the second lateral member 223 to the internal space (e.g., the second space 2201 in FIG. 1A) of the second housing 220. In the embodiment, the flexible display 230 may be disposed to be supported by at least a part of the first support member 2131 and at least a part of the second support member 2231.

According to various embodiments, at least one of the hinge modules 320, 320-1, and 320-3 may include a first hinge module 320 provided between the first housing 210 and the second housing 220 and disposed at a lower end of the electronic device 200 in a direction (e.g., a ±y-axis direction) of the folding axis F, a second hinge module 320-1 disposed at an upper end of the electronic device 200, and a third hinge module 320-2 disposed between the first hinge module 320 and the second hinge module 320-1. In the embodiment, the electronic device 200 may include a single hinge module and two hinge modules disposed at designated intervals or four or more hinge modules disposed at designated intervals. In the embodiment, the hinge modules 320, 320-1, and 320-3 may have substantially the same configuration.

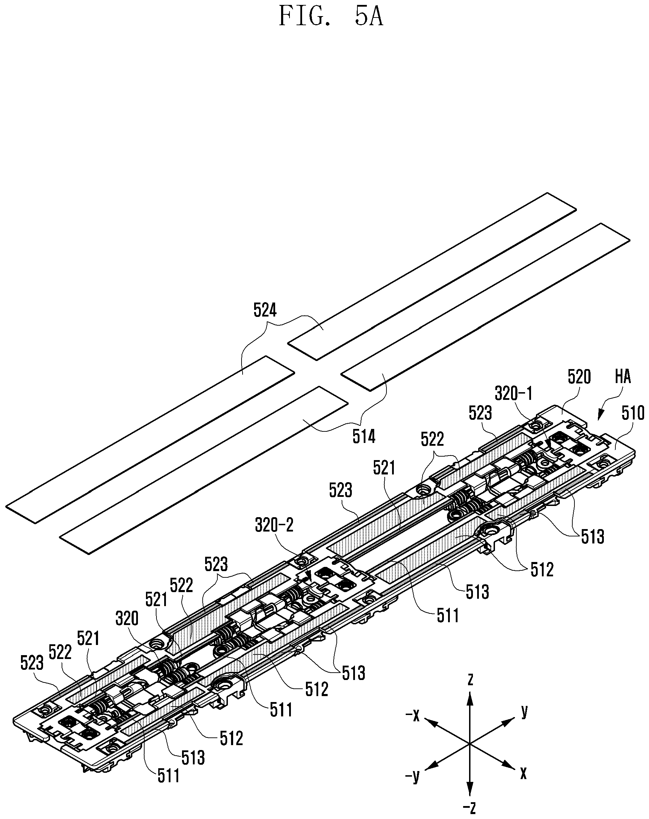

According to various embodiments, the electronic device 200 may include a first hinge plate 510 disposed at one side of the folding axis F so as to correspond to at least a part of the first housing 210 and disposed below the flexible display 230, and a second hinge plate 520 disposed at the other side of the folding axis F so as to correspond to at least a part of the second housing 220 and disposed below the flexible display 230. In the embodiment, the first hinge plate 510 may be disposed to connect at least one of the hinge modules 320, 320-1, and 320-3 and the first housing 210. In the embodiment, the second hinge plate 520 may be disposed to connect at least one of the hinge modules 320, 320-1, and 320-3 and the second housing 220. In the embodiment, the first hinge plate 510 and the second hinge plate 520 may be at least partially made of a nonmetallic material to reduce the weight of the electronic device 200. In the embodiment, the first hinge plate 510 and the second hinge plate 520 may be made of carbon fiber reinforced plastic (CFRP) or polycarbonate (PC) having strength for supporting the flexible display 230. In the embodiment, at least one of the hinge modules 320, 320-1, and 320-3 and the first and second hinge plates 510 and 520, which are coupled to at least one of the hinge modules 320, 320-1, and 320-3, may be configured as a hinge assembly (e.g., a hinge assembly HA in FIG. 5A).

According to various embodiments, the first hinge plate 510 may include first buffer members 511 (e.g., first impact absorbing members) disposed to have a length in the folding axis direction (e.g., the ±y-axis direction). In the embodiment, the second hinge plate 520 may include second buffer members 521 (e.g., second impact absorbing members) disposed to have a length in the folding axis direction (e.g., the ±y-axis direction). In the embodiment, depending on a shape of the first hinge plate 510, the first buffer member 511 may be disposed as a single first buffer member or two or more first buffer members separated for respective areas. In the embodiment, depending on a shape of the second hinge plate 520, the second buffer member 521 may be disposed as a single second buffer member or two or more second buffer members separated for respective areas. In the embodiment, the first buffer member 511 may be disposed along an edge of the first hinge plate 510 in a direction (e.g., the -x-axis direction) directed toward the folding axis. In the embodiment, the second buffer member 521 may be disposed along an edge of the second hinge plate 520 in a direction (e.g., the x-axis direction) directed toward the folding axis. In the embodiment, the first buffer member 511 and the second buffer member 521 may be respectively fixed to the first hinge plate 510 and the second hinge plate 520 by injection molding, bonding, taping, or structural coupling. In the embodiment, the first buffer member 511 and the second buffer member 521 may be disposed to be in contact with the flexible display 230 and at least one of the hinge modules 320, 320-1, and 320-3. In the embodiment, the first buffer member 511 and the second buffer member 521 may support at least a part of the rear surface of the flexible display 230 corresponding to the folding area (e.g., the folding area 230c in FIG. 1A), thereby assisting in improving the durability of the flexible display 230. In the embodiment, the first buffer member 511 and the second buffer member 521 may include any one of high-rebound sponge, rubber, urethane, and silicone. In the embodiment, a width of each of the first and second buffer members 511 and 521 in a direction (e.g., the ±x-axis direction) perpendicular to the folding axis F may be appropriately determined depending on the folding shape of the flexible display 230.

According to various embodiments, the electronic device 200 may include first cover layers 514 disposed between the flexible display 230 and the first hinge plate 510. In the embodiment, the electronic device 200 may include second cover layers 524 disposed between the flexible display 230 and the second hinge plate 520. In the embodiment, depending on a shape of the first hinge plate 510, the first cover layer 514 may be disposed as a single first cover layer or two or more first cover layers separated for respective areas. Further, depending on a shape of the second hinge plate 520, the second cover layer 524 may be disposed as a single second cover layer or two or more second cover layers separated for respective areas. In the embodiment, the first cover layer 514 and the second cover layer 524 may be formed as a woven fabric member (e.g., a non-woven fabric) or a polymer (e.g., polyethylene terephthalate (PET)) sheet. In the embodiment, the first cover layer 514 and the second cover layer 524 may be disposed between an area, in which the first buffer member 511 is disposed, and an area, in which the first buffer member 511 is not disposed, and assist in absorbing an impact and improving connection to reduce a leak of a lubricating material such as grease applied to at least one of the hinge modules 320, 320-1, and 320-2.

According to various embodiments, the electronic device 200 may include first members 512 and second members 513 disposed between the flexible display 230 and the first hinge plate 510 and sequentially disposed from one side of the first buffer member 511 in a direction (e.g., the x-axis direction) away from the folding axis F. In the embodiment, the first member 512 and the second member 513 may each be disposed to have a length in the direction (e.g., the ±y-axis direction) of the folding axis F. In the embodiment, the electronic device 200 may include third members 522 and fourth members 523 disposed between the flexible display 230 and the second hinge plate 520 and sequentially disposed from one side of the second buffer member 521 in the direction (e.g., the -x-axis direction) away from the folding axis F. In the embodiment, the third member 522 and the fourth member 523 may each be disposed to have a length in the direction (e.g., the ±y-axis direction) of the folding axis F. In the embodiment, depending on shapes of the first and second hinge plates 510 and 520, the first member 512, the second member 513, the third member 522, and the fourth member 523 may each be disposed as a single member or two or more members separated for respective areas. In the embodiment, the first member 512, the second member 513, the third member 522, and the fourth member 523 may be respectively fixed to the first hinge plate 510 and the second hinge plate 520 by injection molding, bonding, taping, or structural coupling. In the embodiment, a width of the first member 512 may be larger than a width of the first buffer member 511 and/or a width of the second member 513. In the embodiment, a width of the third member 522 may be larger than a width of the second buffer member 521 and/or a width of the fourth member 523. In the embodiment, the first member 512 and the third member 522 may be disposed between the flexible display 230 and at least one of the hinge modules 320, 320-1, and 320-2 and perform a level difference compensation function for compensating for a gap formed by a thickness of the first buffer member 511 and/or a buffer function between at least one of the hinge modules 320, 320-1, and 320-2 and the flexible display 230. In the embodiment, the second member 513 and the fourth member 523 may be disposed below the flexible display 230 and support a part of the folding area, thereby improving the flexibility of the flexible display 230 and/or performing the buffer function between at least one of the hinge modules 320, 320-1, and 320-2 and the flexible display 230. In the embodiment, the first member 512, the second member 513, the third member 522, and the fourth member 523 may each include any one of sponge, rubber, urethane, and silicone.

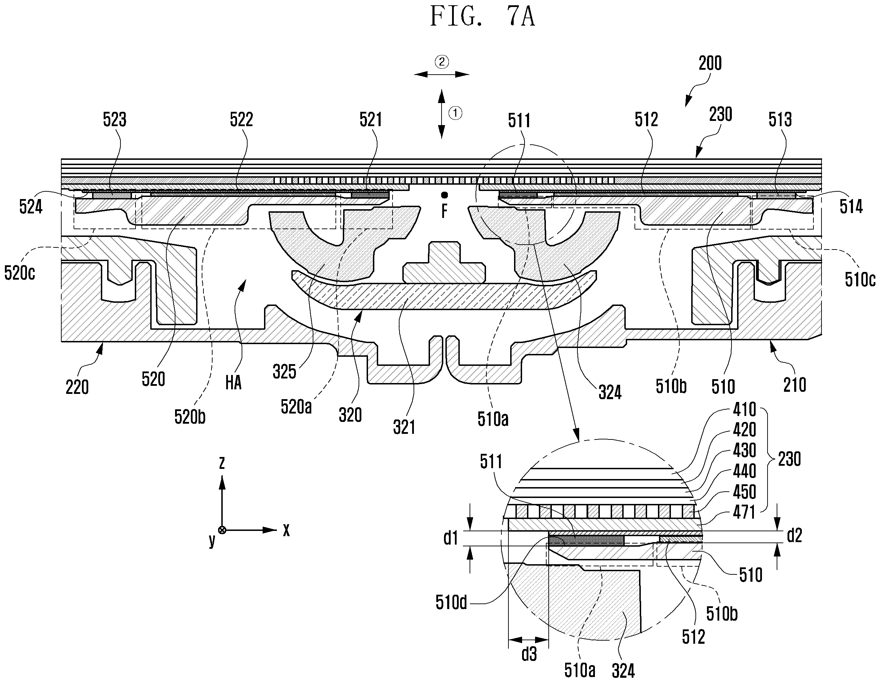

The first hinge plate 510 according to the exemplary embodiment of the present disclosure may be configured such that a part (e.g., a first plate part 510a in FIG. 7A), which supports the first buffer member 511, is farther from the flexible display 230 than a peripheral part (e.g., a second plate part 510b and/or a third plate part 510c in FIG. 7A) from the flexible display 230 or the part (e.g., the first plate part 510a in FIG. 7A), which supports the first buffer member 511, has a smaller thickness than the peripheral part (e.g., the second plate part 510b and/or the third plate part 510c in FIG. 7A), such that it is possible to reduce an increase in thickness caused by the accommodation of the first buffer member 511, which may assist in slimming down the electronic device. For example, the second hinge plate 520 including the second buffer member 521 may have substantially the same configuration.

FIG. 4 is an exploded perspective view of the first display according to various embodiments of the present disclosure.

FIG. 4 is an exploded perspective view of the first display according to various embodiments of the present disclosure. Hereinafter, the first display will be referred to as a 'flexible display'.

The flexible display (e.g., the first display 230 in FIG. 1A) according to the exemplary embodiments of the present disclosure may include an unbreakable (UB) type OLED display (e.g., a curved display). However, the present disclosure is not limited thereto. The flexible display 230 may include a flat type display that is an OCTA (on-cell-touch active matrix organic light-emitting diode (AMOLED)) type display.

With reference to FIG. 4, the flexible display 230 (e.g., the first display in FIG. 1A) may include the window layer 410, and a polarizing layer (POL (polarizer)) 420 (e.g., a polarizing film), a display panel 430, a polymer layer 440, a support plate 450, and lower layers sequentially disposed on a rear surface (e.g., the -z-axis direction) of the window layer 410. In the embodiment, the lower layers may be disposed below the support plate 450 and include a first lower layer disposed at a position corresponding to at least a part of the first housing 210, and a second lower layer disposed at a position corresponding to at least a part of the second housing 220. In the embodiment, the first lower layer may include a first reinforcement plate 461 and/or a first digitizer 471 at least partially disposed below the support plate 450. In the embodiment, in case that the first reinforcement plate 461 and the first digitizer 471 are disposed together, the first digitizer 471 may be disposed between the support plate 450 and the first reinforcement plate 461. In the embodiment, the second lower layer may include a second reinforcement plate 462 and/or a second digitizer 472 at least partially disposed below the support plate 450. In the embodiment, in case that the second reinforcement plate 462 and the second digitizer 472 are disposed together, the second digitizer 472 may be disposed between the support plate 450 and the second reinforcement plate 462. In any embodiment, the first digitizer 471 and the second digitizer 472 may be disposed as a single integrated digitizer 470. In this case, an area corresponding to a bending area (e.g., the folding area 230c in FIG. 1A) of the flexible display 230 may be configured to be bendable. In any embodiment, the digitizer 470 may be disposed between the polymer layer 440 and the support plate 450. For example, in case that the flexible display 230 is a POL-less display, the polarizing layer may be excluded, and a transparent reinforcement layer (e.g., a buffer layer) may be further disposed at a position of the polarizing layer. In any embodiment, the reinforcement plates 461 and 462 and/or the digitizer 470 may be excluded.

According to various embodiments, the window layer 410 may include a glass layer. In the embodiment, the window layer 410 may include an ultra-thin glass (UTG). In any embodiment, the window layer 410 may include polymer. In this case, the window layer 410 may include polyethylene terephthalate (PET) or polyimide (PI). In any embodiment, the window layer 410 may be disposed as a plurality of layers including glass layers and polymer. In any embodiment, the flexible display 230 may further include a coating layer formed on the glass layer, which is formed as a part of the window layer 410, or formed on at least a part of an upper surface, a rear surface, or a side surface of polymer (e.g., a protective film layer) disposed on an upper portion of the glass layer. In this case, the coating layer may include a hard coating layer (HC layer), an anti-reflection (AR)/low-reflection (LR) coating layer, a shatter-proof (SP) coating layer, and/or an anti-fingerprint (AF) coating layer. In any embodiment, the coating layer may be formed between the polymer and the glass layer, formed on the side surface of the polymer, or formed on at least one of the rear surface and the side surface of the glass layer.

According to various embodiments, the window layer 410, the polarizing layer 420, the display panel 430, the polymer layer 440, and the support plate 450 may be disposed to traverse at least a part of the first surface (e.g., the first surface 211 in FIG. 1A) of the first housing (e.g., the first housing 210 in FIG. 1A) and at least a part of the third surface (e.g., the third surface 221 in FIG. 1A) of the second housing (e.g., the second housing 220 in FIG. 1A). In the embodiment, the reinforcement plates 461 and 462 may be used as the ground for providing rigidity for the flexible display 230 and preventing or reducing an erroneous operation of the flexible display 230. In the embodiment, the reinforcement plates 461 and 462 may be made of a metallic material. In the embodiment, the reinforcement plates 461 and 462 may be made of SUS or Al. In the embodiment, the window layer 410, the polarizing layer 420, the display panel 430, the polymer layer 440, the support plate 450, and the reinforcement plates 461 and 462 may be attached to one another by means of adhesive agents P1, P2, and P3 (or bonding agents). For example, the adhesive agents P1, P2, and P3 may each include at least one of an optical clear adhesive (OCA), a pressure sensitive adhesive (PSA), a thermally reactive bonding agent, a general bonding agent, and a double-sided tape.

According to various embodiments, the display panel 430 may include a plurality of pixels and a wiring structure (e.g., an electrode pattern). In the embodiment, the polarizing layer 420 may selectively transmit light that is generated from a light source of the display panel 430 and vibrates in a predetermined direction. In the embodiment, the display panel 430 and the polarizing layer 420 may be integrated. In the embodiment, the flexible display 230 may also include a touch panel (not illustrated).

According to various embodiments, the polymer layer 440 may be disposed below the display panel 430 to provide a dark background for ensuring the visibility of the display panel 430, and the polymer layer 440 may be made of a buffer material for ensuring a buffer operation. In any embodiment, in order to ensure the waterproofness of the flexible display 230, the polymer layer 440 may be removed or disposed below the support plate 450. In any embodiment, the polymer layer 440 may be excluded in case that the support plate is made of an opaque material.

According to various embodiments, the support plate 450 may provide bending properties to the flexible display 230. For example, the support plate 450 may be made of a nonmetallic thin-plate-shapes material such as fiber reinforced plastic (FRP) (e.g., carbon fiber reinforced plastic (CFRP) or glass fiber reinforced plastic (GFRP)) having rigid properties for supporting the display panel 430. In the embodiment, the support plate 450 may include a first planar portion 451 corresponding to the first housing (e.g., the first housing 210 in FIG. 1A), a second planar portion 452 corresponding to the second housing (e.g., the second housing 220 in FIG. 1A), and a flexible portion 453 (flexible portion or bending portion) configured to connect the first planar portion 451 and the second planar portion 452. In the embodiment, the flexible portion 453 may be formed to have a pattern 4531 for improving the flexibility. In the embodiment, the pattern 4531 may include a plurality of openings formed at designated intervals and formed through the support plate from an upper surface to a rear surface of the support plate. In the embodiment, the bending properties of the flexible portion 453 may be determined on the basis of at least one of sizes, shapes, and arrangement densities of at least some of the plurality of openings of the pattern 4531. In any embodiment, the support plate 450 may be made of a metallic material such as steel use stainless (SUS) (e.g., stainless steel (STS)), Cu, Al, or metal CLAD (e.g., a stack member in which SUS and Al are alternately disposed). In this case, the plurality of openings may be formed in an overall area of the support plate 450 so that a detection operation of the digitizer 470 disposed below the support plate 450 is induced. In the embodiment, the support plate 450 may assist in reinforcing the rigidity of the electronic device (e.g., the electronic device 200 in FIG. 1A), block surrounding noise, and disperse heat discharged from peripheral heat-radiating components.

According to various embodiments, the flexible display 230 may include at least one functional member (not illustrated) disposed between the polymer layer 440 and the support plate 450 or disposed below the support plate 450. In the embodiment, the functional members may include a graphite sheet for heat dissipation, a force touch FPCB, a fingerprint sensor FPCB, a communication antenna radiator, or a conductive/non-conductive tape. In the embodiment, in case that the functional member cannot be bent, the functional members may be independently disposed on the first housing (e.g., the first housing 210 in FIG. 1A) and the second housing (e.g., the second housing 220 in FIG. 1A). In the embodiment, in case that the functional member may be bent, the functional member may be disposed from the first housing (e.g., the first housing 210 in FIG. 1A) to at least a part of the second housing (e.g., the second housing 220 in FIG. 1A) through at least one of the hinge modules (e.g., the hinge modules 320, 320-1, and 320-2 in FIG. 3).

According to various embodiments, the flexible display 230 may include a bending portion 432 disposed to be folded from the display panel 430 to at least a partial area of the rear surface (e.g., the -z-axis direction) of the flexible display 230. In the embodiment, the bending portion 432 may include an extension portion 4321 extending from the display panel 430 and including a control circuit 4321a, and a flexible substrate 4322 (e.g., a flexible printed circuit board (FPCB)) electrically connected to the extension portion 4321 and including a plurality of electric elements. In the embodiment, the control circuit 4321a may include a display driver IC (DDI) or a touch display driver IC (TDDI) disposed on the extension portion 4321 having the electrical wiring structure. In the embodiment, the bending portion 432 may include a chip-on-panel or chip-on-plastic (COP) structure in which the control circuit 4321a is disposed directly on the extension portion 4321. In any embodiment, the bending portion 432 may include a chip-on-film (COF) structure in which the control circuit 4321a is disposed on a separate connection film (not illustrated) configured to connect the extension portion 4321 and the flexible substrate 4322. In the embodiment, the flexible display 230 may include a plurality of electric elements (not illustrated) disposed on the flexible substrate 4322. In the embodiment, the flexible display 230 may include a connector portion 4323 extending from the flexible substrate 4322 and electrically connected to a substrate (e.g., a main printed circuit board) disposed in the internal space of the electronic device 200. In the embodiment, the plurality of electric elements may include at least one of a touch IC, a display flash memory, an ESD prevention diode, a pressure sensor, or a fingerprint sensor.

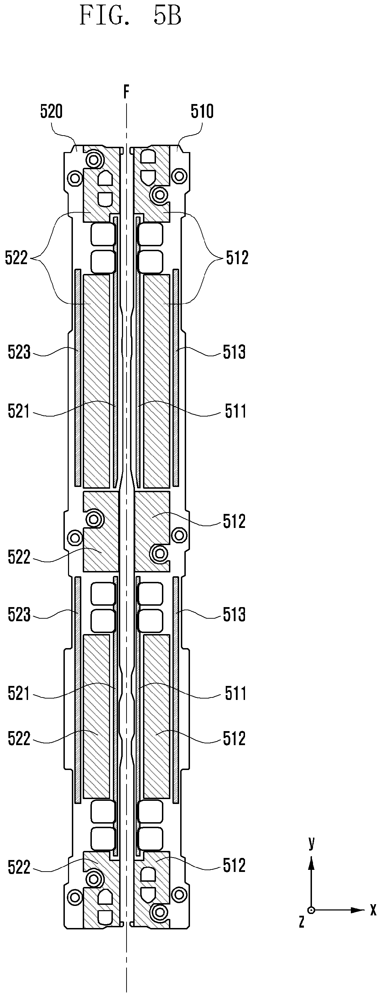

FIG. 5A is a perspective view of the hinge assembly according to various embodiments of the present disclosure. FIG. 5B is a perspective view of the first hinge module according to various embodiments of the present disclosure.

With reference to FIGS. 5A and 5B, the hinge assembly HA may include the first hinge plate 510 and the second hinge plate 520 disposed to be supported by at least one of the hinge modules 320, 320-1, and 320-2. In the embodiment, the first hinge plate 510 and the second hinge plate 520 may be fixed to at least a part of at least one of the hinge modules 320, 320-1, and 320-2. In the embodiment, the first hinge plate 510 and the second hinge plate 520 may be disposed to be rotatable relative to each other about the folding axis (e.g., the folding axis F in FIG. 3) of the electronic device (e.g., the electronic device 200 in FIG. 3) by means of at least one of the hinge modules 320, 320-1, and 320-2. In the embodiment, the first hinge plate 510 and the second hinge plate 520 may be at least partially made of carbon fiber reinforced plastic (CFRP) to reduce the weight of the electronic device (e.g., the electronic device 200 in FIG. 1A).

According to various embodiments, the first hinge plate 510 may include the first buffer member 511 disposed to have a length along the edge in the direction (e.g., the -x-axis direction) of the second hinge plate 520. In the embodiment, the second hinge plate 520 may include the second buffer member 521 disposed to have a length along the edge in the direction (e.g., the x-axis direction) of the first hinge plate 510. In the embodiment, the first hinge plate 510 may include the first members 512 and the second members 513 sequentially disposed from one side of the first buffer member 511 in the direction (e.g., the x-axis direction) away from the second hinge plate 520. In the embodiment, the second hinge plate 520 may include the third members 522 and the fourth members 523 sequentially disposed from one side of the second buffer member 521 in the direction (e.g., the -x-axis direction) away from the first hinge plate 510. In the embodiment, the first member 512 and the third member 522 may be disposed between the flexible display (e.g., the flexible display 230 in FIG. 3) and at least one of the hinge modules 320, 320-1, and 320-2 and perform a level difference compensation function for compensating for a gap formed by a thickness of the first buffer member 511 and/or a buffer function between at least one of the hinge modules 320, 320-1, and 320-2 and the flexible display (e.g., the flexible display 230 in FIG. 3). In the embodiment, the second member 513 and the fourth member 523 may be disposed below the flexible display (e.g., the flexible display 230 in FIG. 3) and support a part of the folding area, thereby improving the flexibility of the flexible display (e.g., the flexible display 230 in FIG. 3) and/or performing the buffer function between at least one of the hinge modules 320, 320-1, and 320-2 and the flexible display (e.g., the flexible display 230 in FIG. 3). In the embodiment, the first hinge plate 510 may include the first cover layers 514 disposed to cover the first buffer members 511, the first members 512, and the second members 513 and provided to be in contact with the rear surface of the flexible display (e.g., the flexible display 230 in FIG. 3). In the embodiment, the second hinge plate 520 may include the second cover layers 524 disposed to cover the second buffer members 521, the third members 522, and the fourth members 523 and provided to be in contact with the rear surface of the flexible display (e.g., the flexible display 230 in FIG. 3). In the embodiment, the first cover layer 514 and the second cover layer 524 may assist in absorbing an impact and improving connection to reduce a leak of a lubricating material such as grease applied to at least one of the hinge modules 320, 320-1, and 320-2.

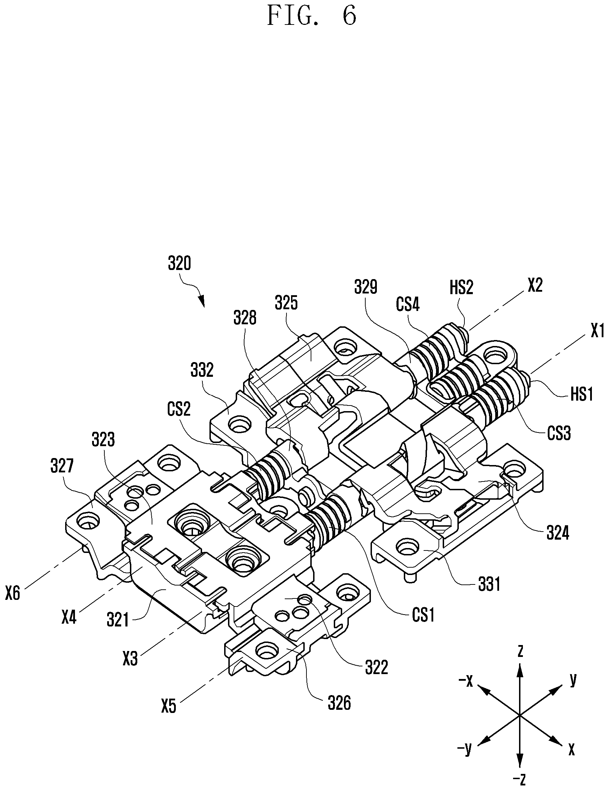

FIG. 6 is a top plan view of hinge plates according to various embodiments of the present disclosure.

The first hinge module will be described with reference to the present drawings. However, the second hinge module and the third hinge module may also have substantially the same configuration. Hereinafter, the first hinge module will be referred to as a 'hinge module'.

With reference to FIG. 6, the hinge module 320 may include a support body 321 (e.g., a rotator bracket or a bracket) fixed to a hinge housing (e.g., the hinge housing 310 in FIG. 2A) by means of fastening members such as screws, a first shaft HS1 disposed on the support body 321 and configured to be rotatable about a first rotation axis X1, a second shaft HS2 disposed on the support body 321 and configured to be rotatable about a second rotation axis X2 spaced apart from the first rotation axis X1, a first rotary member 322 (e.g., a first rotator) disposed on the support body 321 and configured to be rotatable about a third rotation axis X3, a second rotary member 323 (e.g., a second rotator) disposed on the support body 321 and configured to be rotatable about a fourth rotation axis X4, a first fixing body 326 coupled to the first rotary member 322 and configured to be rotatable about a fifth rotation axis X5, a second fixing body 327 coupled to the second rotary member 323 and configured to be rotatable about a sixth rotation axis X6, a first arm member 324 (e.g., a first hinge arm) having one end coupled to the first shaft HS1 and configured to be rotatable about the first rotation axis X1, and a second arm member 325 (e.g., a second hinge arm) having one end coupled to the second shaft HS2 and configured to be rotatable about the second rotation axis X2. In the embodiment, the first fixing body 326 may be fixed to the first housing (e.g., the first housing 210 in FIG. 3). In the embodiment, the second fixing body 327 may be fixed to the second housing (e.g., the second housing 220 in FIG. 3). In the embodiment, the hinge module 320 may include a first link 331 fixed to the first housing (e.g., the first housing 210 in FIG. 3) and configured to guide the other end of the first arm member 324 so that the other end of the first arm member 324 is movable, and a second link 332 fixed to the second housing (e.g., the second housing 220 in FIG. 3) and configured to guide the other end of the second arm member 325 so that the other end of the second arm member 325 is movable. In the embodiment, the first link 331 may be fixed to the first housing (e.g., the first housing 210 in FIG. 3), and the second link 332 may be fixed to the second housing (e.g., the second housing 220 in FIG. 3). In any embodiment, the first link 331 may be integrated with the first fixing body 326. In any embodiment, the second link 332 may be integrated with the second fixing body 327.

According to various embodiments, the hinge module 320 may include a first cam structure 328 cam-coupled to a cam structure provided at one end of each of the arm members 324 and 325, and a second cam structure 329 cam-coupled to a cam structure provided at the other end of each of the arm members 324 and 325. In the embodiment, the hinge module 320 may include a first torque generation structure configured to generate torque by pressing the first cam structure 328 in the direction (e.g., the y-axis direction) of the arm members 324 and 325 by means of a first elastic member CS1 (e.g., a first spring), which is disposed to be penetrated by the first shaft HS1, and a second elastic member CS2 (e.g., a second spring) disposed to be penetrated by the second shaft HS2. In the embodiment, the hinge module 320 may include a second torque generation structure configured to generate torque by pressing the second cam structure 329 in the direction (e.g., the -y-axis direction) of the arm members 324 and 325 by means of a third elastic member CS3 (e.g., a third spring), which is disposed to be penetrated by the first shaft HS1, and a fourth elastic member CS4 (e.g., a fourth spring) disposed to be penetrated by the second shaft HS2. In the embodiment, with the first torque generation structure and the second torque generation structure, the hinge module 320 may change the state of the first housing (e.g., the first housing 210 in FIG. 3) and the state of the second housing (e.g., the second housing 220 in FIG. 3) from the unfolded state to the folded state, provide a pressing force for pressing the first and second housings in a rotation direction to change the state from the folded state to the unfolded state, or provide a free-stop function to stop the first housing (e.g., the first housing 210 in FIG. 3) and the second housing (e.g., the second housing 220 in FIG. 3) in the intermediate state between the folded state and the unfolded state.

According to various embodiments, the first hinge plate (e.g., the first hinge plate 510 in FIG. 5A) may be disposed to be supported by the first arm member 324 and/or the first rotary member 322. In the embodiment, the second hinge plate (e.g., the second hinge plate 520 in FIG. 5A) may be disposed to be supported by the second arm member 325 and/or the second rotary member 323. In any embodiment, the first hinge plate (e.g., the first hinge plate 510 in FIG. 5A) may be fixed to the first rotary member 322, and the second hinge plate (e.g., the second hinge plate 520 in FIG. 5A) may be fixed to the second rotary member 323. For example, the first rotary member 322 is coupled to the support body 321 and the first fixing body 326 so that the first rotary member 322 and the first fixing body 326 are respectively rotatable about the two axes (e.g., the third axis X3 and the fifth axis X5), such that in the folded state, the first hinge plate (e.g., the first hinge plate 510 in FIG. 5A) may have a different rotation angle from the first housing (e.g., the first housing 210 in FIG. 3). For example, the second rotary member 323 is coupled to the support body 321 and the second fixing body 327 so that the second rotary member 323 and the second fixing body 327 are respectively rotatable about the two axes (e.g., the fourth axis X4 and the sixth axis X6), such that in the folded state, the second hinge plate (e.g., the second hinge plate 520 in FIG. 5A) may have a different rotation angle from the second housing (e.g., the second housing 220 in FIG. 3). Therefore, in the folded state of the electronic device (e.g., the electronic device 200 in FIG. 3), at least a part of the folding area of the flexible display (e.g., the flexible display 230 in FIG. 3), which is folded in a water droplet shape, may be supported by the hinge plates (e.g., the first hinge plate 510 and the second hinge plate 520 in FIG. 5A) that are further folded by an angle (e.g., an angle of 90 degrees or more) larger than a folding angle (e.g., about 90 degrees) between the first housing (e.g., the first housing 210 in FIG. 3) and the second housing (e.g., the second housing 220 in FIG. 3).

FIG. 7A is a partially cross-sectional view of the electronic device taken along line 7-7 in FIG. 1A according to various embodiments of the present disclosure.

With reference to FIG. 7A, the electronic device may include the first housing 210, the second housing 220, the hinge module 320, which connects the first housing 210 and the second housing 220 so that the first housing 210 and the second housing 220 are rotatable relative to each other, and the flexible display 230 disposed to be supported by the first housing 210 and the second housing 220. In the embodiment, the electronic device 200 may include the first hinge plate 510 disposed at one side of the folding axis F so as to correspond to at least a part of the first housing 210 and disposed below the flexible display 230, and the second hinge plate 520 disposed at the other side of the folding axis F so as to correspond to at least a part of the second housing 220 and disposed below the flexible display 230.

According to various embodiments, the first hinge plate 510 may include the first plate part 510a disposed to at least partially overlap the hinge module 320 when viewed in a first direction (e.g., direction ①) perpendicular to the surface (e.g., the upper surface) of the flexible display 230, and the second plate part 510b extending from the first plate part 510a. In the embodiment, the first hinge plate 510 may include the third plate part 510c extending from the second plate part 510b. In the embodiment, the first plate part 510a may be positioned in an edge area of the first hinge plate 510 in the direction (e.g., the -x-axis direction) toward the folding axis F.

According to various embodiments, the first plate part 510a may be disposed to be farther from the flexible display 230 in the first direction (direction ①) than the second plate part 510b from the flexible display 230. For example, a first spacing distance d1 between the first plate part 510a and the flexible display 230 may be longer than a second spacing distance d2 between the second plate part 510b and the flexible display 230. In other words, a first separation, gap, or spacing d1 between a surface (e.g. a nominal "upper" surface) of the first plate part 510a facing the flexible display 230 (i.e. facing upwards, in the +z direction in FIG. 7A) and an underside (or lower, downward-facing, or rear surface) of the flexible display 230 may be greater than a second separation, gap, or spacing d2 between a surface (e.g. an "upper" surface) of the second plate part 510b facing the flexible display 230 (i.e. facing upwards, in the +z direction in FIG. 7A) and the underside of the flexible display 230. In the arrangement shown in FIG. 7A, the upper surface of the second plate part 510b is higher (in the +z direction) than the upper surface of the first plate part 510a, and so is closer to the flexible display 230 (i.e. it is closer to the underside, or rear surface, of the flexible display). In the embodiment, a thickness of the first plate part 510a may be smaller than a thickness of the second plate part 510b. For example, the first plate part 510a may include a stepped surface 510d formed to be lower than an upper surface of the second plate part 510b so that the first plate part 510a has a smaller thickness than the second plate part 510b. In any embodiment, the first plate part 510a may be made of a metallic material coupled to the second plate part 510b by injection molding, taping, bonding, or structural coupling. In this case, a weight per unit area of the first plate part 510a may be heavier than a weight per unit area of the second plate part 510b. In the embodiment, an area of the first plate part 510a may be narrower than an area of the second plate part 510b.

According to various embodiments, the electronic device 200 may include the first buffer member 511 (e.g., the first impact absorbing member) disposed on the first plate part 510a of the first hinge plate 510. In the embodiment, the first buffer member 511 may be disposed by being attached to the stepped surface 510d of the first plate part 510a. In the embodiment, the first buffer member 511 may be disposed by being brought into contact with the rear surface of the flexible display 230 and the first arm member 324 of the hinge module 320. For example, with the shape of the first plate part 510a formed to be lower than the second plate part 510b, the first buffer member 511 may be formed such that the overall thickness of the first hinge plate 510 is maintained to be equal to that in the related art or the overall thickness of the first hinge plate 510 may be increased to a comparatively small degree so that the first hinge plate 510 has a thickness sufficient for the buffer function. Therefore, the first buffer member 511 may support the rear surface of the flexible display 230 in the folding area (e.g., the folding area 230c in FIG. 1A) of the flexible display 230, which may assist in improving the durability of the flexible display 230. In addition, the first hinge plate 510 may assist in slimming down the electronic device 200 by means of the first plate part 510a formed to maintain the thickness of the first hinge plate 510 or increase the thickness of the first hinge plate 510 to a comparatively small degree while maintaining the thickness for implementing the sufficient buffer performance of the first buffer member 511. In addition, the first hinge plate 510 may be at least partially made of carbon fiber reinforced plastic (CFRP), which may assist in reducing the weight of the electronic device 200.

According to various embodiments, the flexible display 230 may include the window layer 410 and the polarizing layer 420, the display panel 430, the polymer layer 440, the support plate 450, and the digitizer 471, i.e., the first lower layer that are sequentially disposed below the window layer in the -z-axis direction. In the embodiment, the first buffer member 511 disposed on the first plate part 510a may be disposed by being brought into contact with the digitizer 471. In the embodiment, the first buffer member 511 may be disposed to have a spacing distance d3 from an end of the digitizer 471 in the second direction (e.g., direction ②) parallel to the surface of the flexible display 230 and perpendicular to the first direction (direction ①). The spacing distance d3 reduces interference with peripheral structures that may occur in case that the first buffer member 511 is disposed to be consistent with or further protrude from the end of the digitizer 471 in the folded state of the electronic device 200, which may assist in improving the operational reliability. In any embodiment, the electronic device 200 may include the first reinforcement plate (e.g., the first reinforcement plate 461 in FIG. 4) disposed below the digitizer 471. In this case, the first buffer member 511 may be disposed to be in contact with the first reinforcement plate (e.g., the first reinforcement plate 461 in FIG. 4) and disposed to have a spacing distance from an end of the first reinforcement plate 461 in the second direction (e.g., direction ②) parallel to the flexible display 230 and perpendicular to the first direction (direction ①). In any embodiment, the digitizer 471 may be excluded, and only the reinforcement plate 461 may be disposed at the corresponding position.

According to various embodiments, the electronic device 200 may include the first member 512 disposed between the second plate part 510b and the flexible display 230, and the second member 513 disposed between the third plate part 510c and the flexible display 230. In the embodiment, the electronic device 200 may include the first cover layer 514 disposed above the first buffer member 511, the first member 512, and the second member 513 and provided to be in contact with the rear surface of the flexible display 230. In the embodiment, the first cover layer 514 may be formed as a woven fabric member (e.g., a non-woven fabric) or a polymer (e.g., polyethylene terephthalate (PET)) sheet. In the embodiment, the first buffer member 511, the first member 512, and the second member 513 may be made of a material having elasticity. In the embodiment, the first buffer member 511, the first member 512, and the second member 513 may include any one of sponge, rubber, urethane, and silicone. In the embodiment, the first member 512 may be made of an elastic material (e.g., low-elasticity material) having higher hardness than the first buffer member 511 and/or the second member 513. In the embodiment, the first buffer member 511 and the second member 513 may be made of elastic materials having the same hardness. In the embodiment, the second buffer member 521 disposed on a fourth plate part 520a, the third member 522 disposed on a fifth plate part 520b, the fourth member 523 disposed on a sixth plate part 520c, and the second hinge plate 520 including the second cover layer 524 may have substantially the same configuration as the first hinge plate 510.

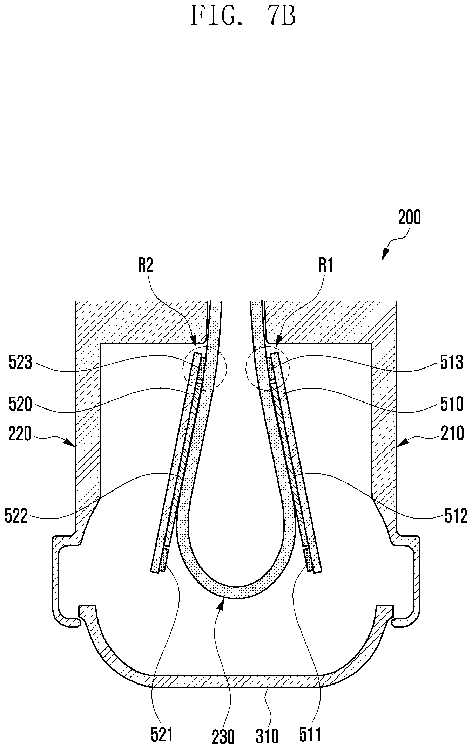

FIG. 7B is a cross-sectional view illustrating the electronic device and illustrating the arrangement of the hinge plates in the folded state according to various embodiments of the present disclosure.

With reference to FIG. 7B, the electronic device 200 may include the first housing 210, the second housing 220, the hinge module 320, which connects the first housing 210 and the second housing 220 so that the first housing 210 and the second housing 220 are rotatable relative to each other, and the flexible display 230 disposed to be supported by the first housing 210 and the second housing 220. In the embodiment, the first hinge plate 510 may include the first buffer member 511, the first member 512, and the second member 513 sequentially disposed in the direction away from the folding axis (e.g., the folding axis F in FIG. 7A).

According to various embodiments, in case that the electronic device 200 is in the folded state, the first buffer member 511 may be positioned to be spaced apart from the flexible display 230, and at least a part of the first member 512 and the second member 513 may be positioned to support the rear surface of the flexible display. In the embodiment, when the electronic device 200 is in the folded state, the second member 513 may be disposed to support a position on the flexible display 230 corresponding to a first reverse bending section R1 formed at the periphery by the folding area having a water droplet shape. In the embodiment, when the electronic device 200 is in the folded state, the first member 512 may be disposed to support a section (approximately rectilinear section) that is bent relatively less than the first reverse bending section R1. In this case, the second member 513 may be made of an elastic material (e.g., high-elasticity material) having lower hardness than the first member 512 and reduce a repulsive force against the first reverse bending section R1, which may assist in improving the flexibility of the flexible display 230. In the embodiment, the second hinge plate 520 may also include the second buffer member 521, the third member 522, and the fourth member 523, and the third member 522 may be disposed to support a second reverse bending section R2 of the flexible display 230 that is symmetrically positioned together with the first reverse bending section R1.

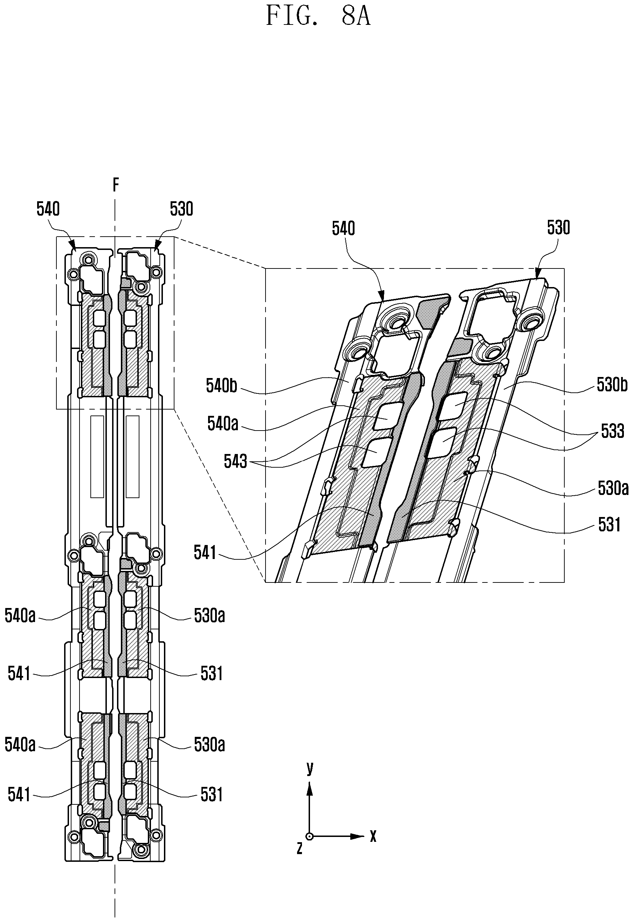

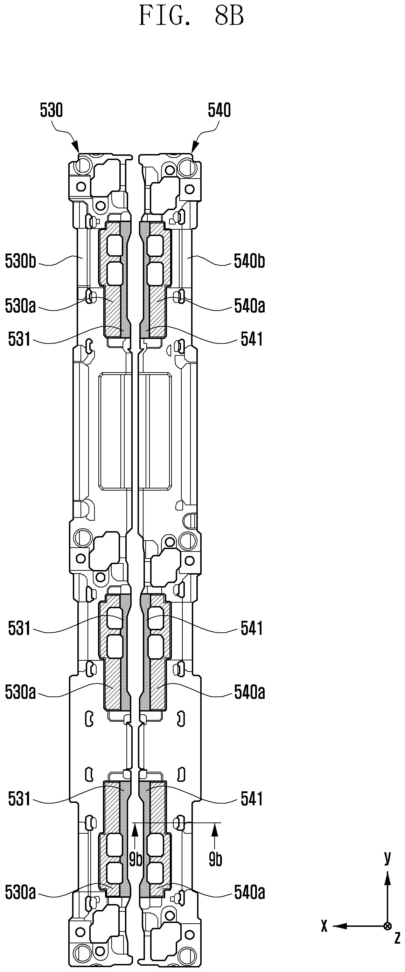

FIG. 8A is a top plan view of the hinge plates according to various embodiments of the present disclosure. FIG. 8B is a rear view of the hinge plates according to various embodiments of the present disclosure.

With reference to FIGS. 8A and 8B, the electronic device (e.g., the electronic device 200 in FIG. 1A) may include a first hinge plate 530 and a second hinge plate 540 disposed to be supported by at least one of the hinge modules (e.g., at least one of the hinge modules 320, 320-1, and 320-2 in FIG. 3). In the embodiment, the first hinge plate 530 may include first plate parts 530a and second plate parts 530b extending from the first plate part 530a in the direction away from the folding axis F. In the embodiment, the second hinge plate 540 may include third plate parts 540a and fourth plate parts 540b. In the embodiment, the first plate part 530a and the third plate part 540a may include a first material, and the second plate part 530b and the fourth plate part 540b may include a second material. In the embodiment, the first material may include a metallic material (e.g., stainless steel). In the embodiment, the second material may include carbon fiber reinforced plastic (CFRP) or polymer. In the embodiment, the first plate part 530a and the third plate part 540a may be fixed to the second plate part 530b and the fourth plate part 540b by means of at least one of taping, bonding, welding, and structural coupling. In the embodiment, the first plate part 530a may be disposed on the second plate part 530b and provided as a single first plate part or two or more first plate parts separated for respective areas in a longitudinal direction (e.g., the ±y-axis direction) of the first hinge plate 530. In the embodiment, the third plate part 540a may be disposed on the fourth plate part 540b and provided as a single third plate part or two or more third plate parts separated for respective areas in a longitudinal direction (e.g., the ±y-axis direction) of the second hinge plate 540.

According to various embodiments, the first hinge plate 530 may include first buffer members 531 disposed at edges of the first plate parts 530a in the direction (e.g., the - x-axis direction) toward the folding axis F. In the embodiment, the second hinge plate 540 may include second buffer members 541 disposed at edges of the third plate parts 540a in the direction (e.g., the x-axis direction) toward the folding axis F. In the embodiment, the first buffer member 531 may be coupled to the first plate part 530a by injection molding, and the second buffer member 541 may be disposed on the third plate part 540a by injection molding. In the embodiment, the first buffer member 531 and the second buffer member 541 may be made of substantially the same material as the first buffer member 511 and/or the second buffer member 521 in FIG. 3.

According to the embodiment, the first hinge plate 530 may include first openings 533 formed in the first plate part 530a. In the embodiment, the first opening 533 may be positioned to overlap the first arm member (e.g., the first arm member 324 in FIG. 6) when the first plate part 530a is viewed in the substantially perpendicular direction (e.g., the z-axis direction). According to the embodiment, the hinge module (e.g., the hinge module 320 in FIG. 6) may have at least one protruding portion protruding toward the flexible display 230. According to the embodiment, the protruding portion is at least partially accommodated in the first opening 533 formed in the first plate part 530a so that the thickness of the hinge module 320, which is increased by the protruding portion, does not cause an increase in thickness of the electronic device 200. According to the embodiment, the second plate part 530b may have no opening positioned to overlap the hinge module 320 when the second plate part 530b is viewed in the substantially perpendicular direction (e.g., the z-axis direction). In the embodiment, the second hinge plate 540 may include second openings 543 formed in the third plate part 540a. In the embodiment, the second opening 543 may perform substantially the same function and operation as the first opening 533.

According to the embodiment, the electronic device may include a flexible circuit board (not illustrated) (e.g., a flexible printed circuit board (FPCB)) configured to connect a first electronic component, which is accommodated in the first housing 210, and a second electronic component accommodated in the second housing 220. For example, the first opening 533 formed in the first plate part 530a may be positioned to overlap the flexible circuit board (not illustrated) when the first plate part 530a is viewed in the substantially perpendicular direction (e.g., the z-axis direction). According to the embodiment, the second plate part 530b may have no opening positioned to overlap the flexible circuit board (not illustrated) when the second plate part 530b is viewed in the substantially perpendicular direction (e.g., the z-axis direction). In the embodiment, the second opening 543 may perform substantially the same function and operation as the first opening 533.

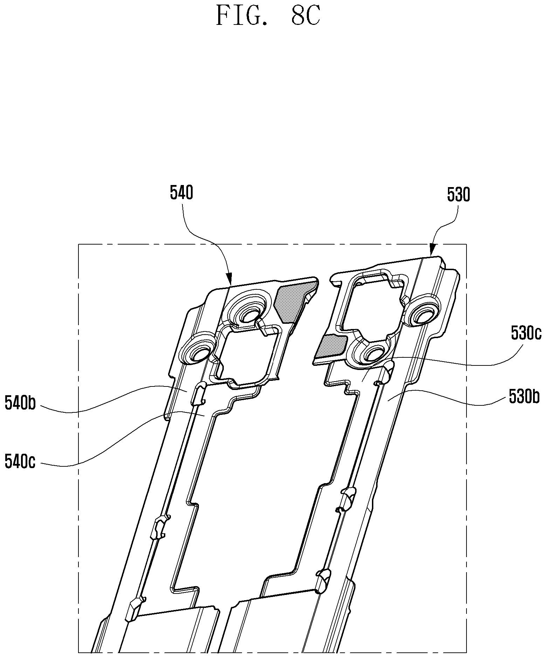

FIG. 8C is a partial perspective view of the hinge plates according to various embodiments of the present disclosure.

FIG. 8C is a view illustrating only the second plate part 530b, from which the first plate part 530a and the first buffer member 531 are removed, and the fourth plate part 540b from which the third plate part 540a and the second buffer member 541 are removed.

With reference to FIG. 8C, the first hinge plate 530 may include a first recess 530c configured to accommodate at least a part of the first plate part 530a. In the embodiment, the first recess 530c may be formed to be lower than an outer surface of the second plate part 530b. In the embodiment, at least a part of the first plate part 530a may be fixed to the first recess 530c by means of at least one method among bonding, taping, welding, and structural coupling. In the embodiment, at least a part of the first plate part 530a may define substantially the same plane as the second plate part 530b by means of the first recess 530c, which may assist in slimming down the electronic device. In the embodiment, the second hinge plate 540 may include a second recess 540c configured to accommodate at least a part of the third plate part 540a. In the embodiment, the second recess 540c may also have substantially the same arrangement structure as the first recess 530c.

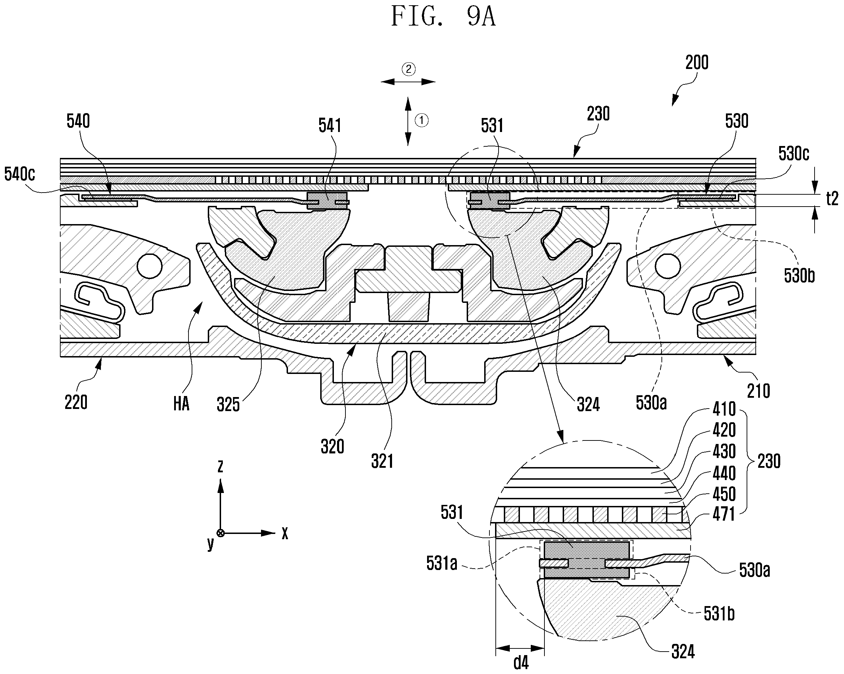

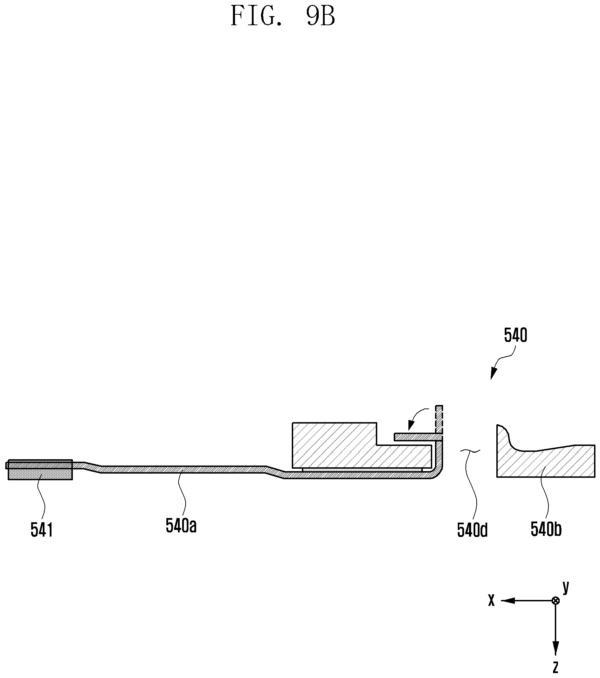

FIG. 9A is a partially cross-sectional view of the electronic device including the hinge plates in FIG. 8A according to various embodiments of the present disclosure. FIG. 9B is a cross-sectional view of the hinge plate taken along line 9b-9b in FIG. 8B according to various embodiments of the present disclosure.

To describe the electronic device in FIGS. 9A and 9B, the constituent elements, which are substantially the same as the constituent elements of the electronic device in FIG. 7A, will be designated by the same reference numerals, and a detailed description thereof will be omitted.

With reference to FIG. 9A, the electronic device may include the first housing 210, the second housing 220, the hinge module 320 (e.g., at least one of the hinge modules 320, 320-1, and 320-2 in FIG. 3), which connects the first housing 210 and the second housing 220 so that the first housing 210 and the second housing 220 are rotatable relative to each other, and the flexible display 230 disposed to be supported by the first housing 210 and the second housing 220. In the embodiment, the electronic device 200 may include the first hinge plate 530 disposed at one side of the folding axis F so as to correspond to at least a part of the first housing 210 and disposed below the flexible display 230, and the second hinge plate 540 disposed at the other side of the folding axis F so as to correspond to at least a part of the second housing 220 and disposed below the flexible display 230.

According to various embodiments, the first hinge plate 530 may include the first plate part 530a disposed to at least partially overlap the hinge module 320 when viewed in the first direction (e.g., direction ①) perpendicular to the surface (e.g., the upper surface) of the flexible display 230, and the second plate part 530b extending from the first plate part 530a. In the embodiment, the first plate part 530a may be positioned in the edge area of the first hinge plate 530 in the direction (e.g., the -x-axis direction) toward the folding axis F. In the embodiment, the first plate part 530a may include the first material, and the second plate part 530b may include the second material. In the embodiment, the first material may be made of a metallic material (e.g., stainless steel). In the embodiment, the second material may be made of polymer or carbon fiber reinforced plastic (CFRP). In the embodiment, the first plate part 530a may be attached to the second plate part 530b by at least one process among joining, bonding, taping, welding (e.g., ultrasonic welding), or structural coupling.

According to various embodiments, the first plate part 530a may be disposed to be farther from the flexible display 230 in the first direction (direction ①) than the second plate part 530b from the flexible display 230. In the embodiment, a thickness of the first plate part 530a may be smaller than a thickness of the second plate part 530b. In the embodiment, a weight per unit area of the first plate part 530a may be heavier than a weight per unit area of the second plate part 530b. For example, the first plate part 530a has a smaller thickness and a relatively heavier weight per unit area than the second plate part 530b, such that the first plate part 530a may assist in reinforcing the rigidity as a support structure for supporting the flexible display 230. In the embodiment, the first plate part 530a may have a smaller thickness than the second plate part 530b and be formed in a shape bent multiple times so that a spacing distance from the flexible display 230 is relatively longer than that of the second plate part 530b. In the embodiment, at least a part of the first plate part 530a is disposed by being seated in the first recess 530c formed to be lower than the upper surface of the second plate part, which may assist in reducing an overall thickness of the first hinge plate 530.

According to various embodiments, the electronic device 200 may include the first buffer member 531 (e.g., the first impact absorbing member) disposed on the first plate part 530a of the first hinge plate 530. In the embodiment, the first buffer member 531 may include any one of sponge, rubber, urethane, and silicone. In the embodiment, the first buffer member 531 may be disposed at an edge of the first plate part 530a in the folding axis direction (e.g., the -x-axis direction). In the embodiment, the first buffer member 531 may be fixed to the first plate part 530a by means of any one process among injection molding, bonding, taping, welding, and structural coupling. In the embodiment, the first buffer member 531 may include a first part 531a provided to be in contact with the rear surface of the flexible display 230 with the first plate part 530a interposed therebetween, and a second part 531b provided to be in contact with at least a part (e.g., the first arm member 324) of the hinge module 320. In the embodiment, the first part 531a may be configured to be thicker than the second part 531b, which may assist the buffer operation for the flexible display 230. In any embodiment, the first part 531a may be configured to have substantially the same thickness as the second part 531b or a smaller thickness than the second part 531b.

The first plate part 530a according to the exemplary embodiment of the present disclosure may be made of a metallic material, have a smaller thickness than the second plate part 530b, and have a shape bent multiple times, thereby allowing the first buffer member 531 to be disposed by being brought into contact with the rear surface of the flexible display 230 and the first arm member 324 of the hinge module 320. Therefore, the first buffer member 531 may be formed such that the overall thickness of the first hinge plate 530 may be maintained to be equal to that in the related art or increased to a comparatively small degree, such that the first buffer member 531 may have a thickness sufficient for the buffer function. For example, the first buffer member 531 may support the rear surface of the flexible display 230 in the folding area (e.g., the folding area 230c in FIG. 1A) of the flexible display 230, which may assist in improving the durability of the flexible display 230. In addition, the first hinge plate 530 may assist in slimming down the electronic device 200 by means of the first plate part 530a formed to maintain the thickness of the first hinge plate 530 or increase the thickness of the first hinge plate 510 to a comparatively small degree while maintaining the thickness for implementing the sufficient buffer performance of the first buffer member 531. In addition, the second plate part 530b of the first hinge plate 530 may be made of carbon fiber reinforced plastic (CFRP), which may assist in reducing the weight of the electronic device 200.

According to various embodiments, the flexible display 230 may include the window layer 410 and the polarizing layer 420, the display panel 430, the polymer layer 440, the support plate 450, and the digitizer 471, i.e., the first lower layer that are sequentially disposed below the window layer in the -z-axis direction. In the embodiment, the first buffer member 531 disposed on the first plate part 530a may be disposed by being brought into contact with the digitizer 471. In the embodiment, the first buffer member 531 may be disposed to have the spacing distance d4 from the end of the digitizer 471 in the second direction (e.g., direction ②) parallel to the surface of the flexible display 230 and perpendicular to the first direction (direction ①). The spacing distance d4 reduces interference with peripheral structures that may occur in case that the first buffer member 531 is disposed to be consistent with or further protrude from the end of the digitizer 471 in the folded state of the electronic device 200, which may assist in improving the operational reliability. In the embodiment, the second hinge plate 540, which includes the second buffer member 541 and includes the third plate part (e.g., the third plate part in FIG. 8A) attached to the second recess 540c formed in the fourth plate part (e.g., the fourth plate part 540b in FIG. 8A), may also have substantially the same configuration as the first hinge plate 530.

In the embodiment, the first recess 530c may be formed in the second plate part 530b in the direction away from a central portion (e.g., the folding axis F) of the flexible display 230 from an edge area close to the central portion, and at least a part of the first plate part 530a may be accommodated in the first recess 530c.

In the embodiment, in the state in which the first housing 210 and the second housing 220 of the electronic device are unfolded, at least a part of the first plate part 530a accommodated in the first recess 530c may be spaced apart from the flexible display 230.

In the embodiment, the first hinge plate 530 may be connected to the first housing 210, and the hinge module 320 may include the second hinge plate 540 connected to the second housing 220. In the state in which the first housing 210 and the second housing 220 are unfolded, no hinge plate may be included and positioned between the first hinge plate 530 and the second hinge plate 540.

With reference to FIG. 9B, the second hinge plate 540 may include the third plate part 540a and the fourth plate part 540b to which the third plate part 540a is fixed. In the embodiment, at least a part of the third plate part 540a penetrates a through-hole 540d formed in the fourth plate part 540b and then bent multiple times, such that the third plate part 540a may be structurally fixed. In the embodiment, the first hinge plate 530 may also have substantially the same configuration.

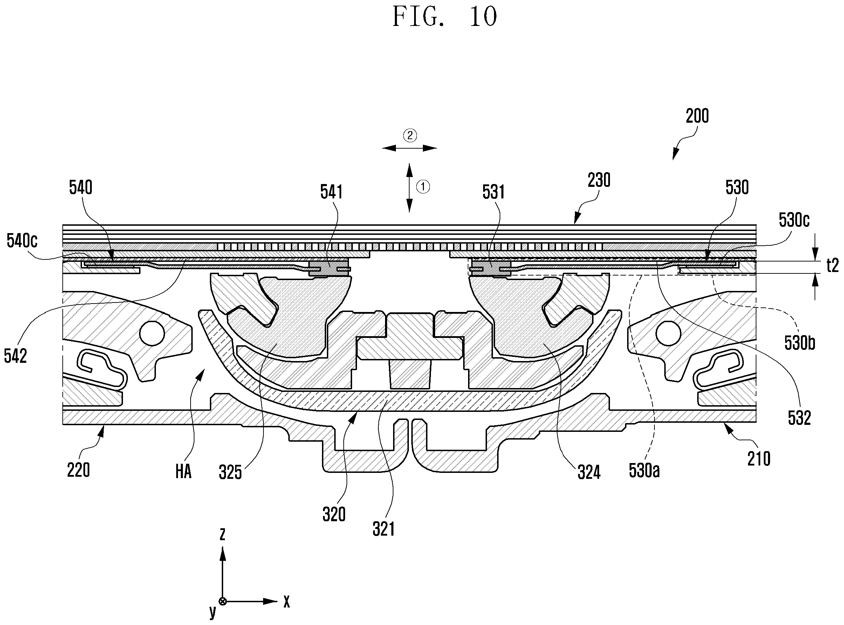

FIG. 10 is a partially cross-sectional view of the electronic device according to various embodiments of the present disclosure.

To describe the electronic device in FIG. 10, the constituent elements, which are substantially the same as the constituent elements of the electronic device in FIG. 9A, will be designated by the same reference numerals, and a detailed description thereof will be omitted.

With reference to FIG. 10, the electronic device 200 may include a first cover layer 532 (e.g., a third impact absorbing member) disposed above the first buffer member 531, the first plate part 530a, and the second plate part 530b and provided to be in contact with the rear surface of the flexible display 230. In the embodiment, the electronic device 200 may include a second cover layer 542 (e.g., a fourth impact absorbing member) disposed above the second buffer member 541, the third plate part 540a, and the fourth plate part 540b and provided to be in contact with the rear surface of the flexible display 230. In the embodiment, the first cover layer 532 and the second cover layer 542 may be formed as a woven fabric member (e.g., a non-woven fabric) or a polymer (e.g., polyethylene terephthalate (PET)) sheet. In the embodiment, the first cover layer 532 and the second cover layer 542 may be disposed between an area, in which the first buffer member 531 and the second buffer member 541 are disposed, and an area, in which the first buffer member 531 and the second buffer member 541 are not disposed, and assist in absorbing an impact and improving connection to reduce a leak of a lubricating material such as grease applied to the hinge module 320.

According to the embodiment, the first cover layer 532 (e.g., the third impact absorbing member) may be at least partially attached to an edge area of the first plate part 530a close to the central portion (e.g., the folding axis F) of the flexible display 230. According to the embodiment, the second cover layer 542 (e.g., the fourth impact absorbing member) may be at least partially attached to an edge area of the third plate part 530b close to the central portion of the flexible display 230.

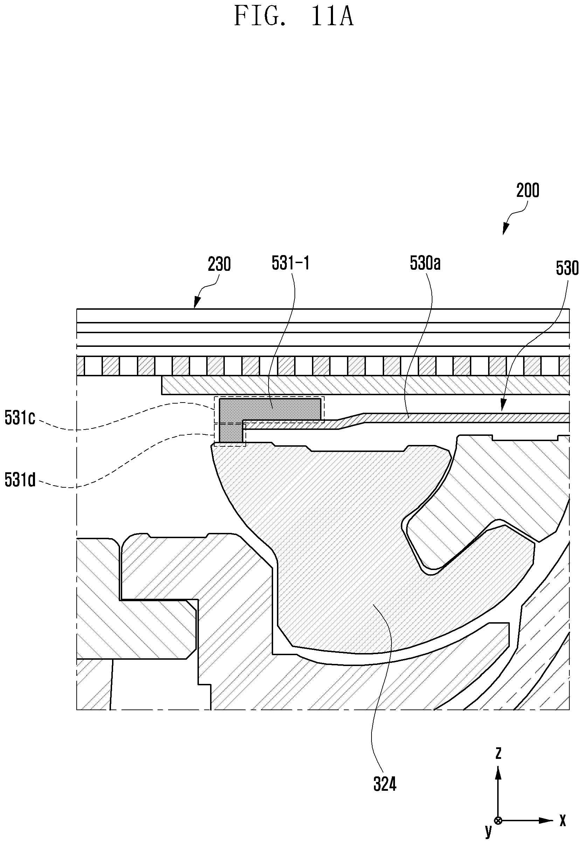

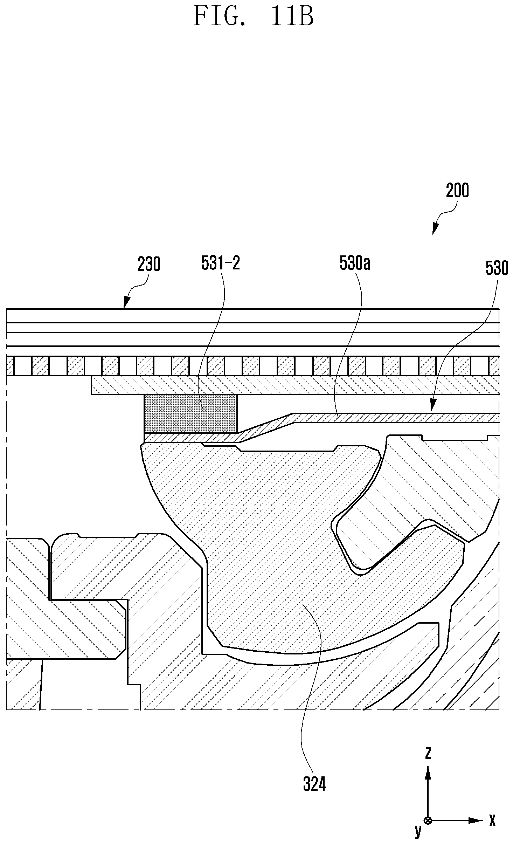

FIGS. 11A and 11B are partially cross-sectional views illustrating the electronic device and illustrating the arrangement of the buffer member applied to the hinge plate according to various embodiments of the present disclosure.

With reference to FIG. 11A, a first buffer member 531-1 disposed at the end of the first plate part 530a of the first hinge plate 530 may include a first part 531c disposed between the first plate part 530a and the flexible display 230, and a second part 531d extending from the first part 531c to a side surface of the first plate part 530a. In the embodiment, the second part 531d may extend in the downward direction (e.g., the -z-axis direction) from the side surface of the first plate part 530a and be disposed by being brought into contact with a part (e.g., the first arm member 324) of the hinge module 320. In any embodiment, the second part 531d may extend only to the side surface of the first plate part 530a so that the first plate part 530a is in contact with a part (e.g., the first arm member 324) of the hinge module 320. In any embodiment, the second part 531d may extend from the side surface to the rear surface of the first plate part 530a. In other words, the second part 531d (or the first buffer member 531-1 as a whole) may fold, or wrap, around an edge of the first plate part 530a, such that respective portions of the first buffer member 531-1 are in contact with an upper surface, a side surface, and a rear surface of the first plate part 530a. In the embodiment, the second buffer member (e.g., the second buffer member 541 in FIG. 8A) may also be disposed on the third plate part 540a in substantially the same way. In the embodiment, the first buffer member 511 and the second buffer member 521 in FIG. 7A may also be disposed on the first plate part 510a of the first hinge plate 510 and the fourth plate part 520a of the second hinge plate 520 in substantially the same way.

With reference to FIG. 11B, a first buffer member 531-2 disposed only on the upper surface of the first plate part 530a and disposed by being brought into contact with the flexible display 230. In this case, the rear surface of the first plate part 530a may be disposed by being brought into contact with a part (e.g., the first arm member 324) of the hinge module 320. The second buffer member (e.g., the second buffer member 541 in FIG. 8A) may also be disposed on the third plate part 540a of the second hinge plate 540 in substantially the same way.

According to various embodiments, a foldable electronic device (e.g., the electronic device 200 in FIG. 7A) includes a housing (which may also be described as a housing assembly, system, arrangement, or apparatus) including a first housing (or first housing component or portion) (e.g., the first housing 210 in FIG. 7A) and a second housing (or second housing component or portion) (e.g., the second housing 220 in FIG. 7A), a flexible display (e.g., the flexible display 230 in FIG. 7A), for example accommodated in the first and second housings (at least when the first and second housings are in the folded-together, closed, configuration or state), and a hinge assembly (e.g., the hinge assembly HA in FIG. 5A) configured to connect the first and second housings so that the first and second housings are foldable about a folding axis (e.g., the folding axis F in FIG. 7A). The hinge assembly includes a hinge module (e.g., the hinge module 320 in FIG. 7A) including an arm member (e.g., the first arm member 324 in FIG. 6) configured to rotate about a first rotation axis (e.g., the first rotation axis X1 in FIG. 6), and a rotary member (e.g., the first rotary member 322 in FIG. 6) configured to rotate about a second rotation axis (e.g., the third rotation axis X3 in FIG. 6) different from the first rotation axis, a first hinge plate (e.g., the first hinge plate 510 in FIG. 7A) including a first plate part (or a first plate portion or section) (e.g., the first plate part 510a in FIG. 7A) configured to at least partially overlap the hinge module (at least when viewed from above, in a direction perpendicular (i.e. normal, at 90 degrees) to the screen, when the device is in the flat, unfolded state), and a second plate part (or second plate portion or section) (e.g., the second plate part 510b in FIG. 7A). The second plate part may extend from the first plate part when viewed in a first direction (e.g., direction ① in FIG. 7A) perpendicular to a surface of the flexible display in an unfolded state of the foldable electronic device. The device may further comprise a buffer member (e.g., the first buffer member 511 in FIG. 7A) positioned between the flexible display and the first plate part, and in certain embodiments the first plate part is farther from the flexible display in the first direction than the second plate part from the flexible display. For example, in certain embodiments, an upper surface of the first hinge plate (that faces an underside of the flexible display) may comprise a first flat portion (e.g. the upper surface of 510a in FIG. 7), and a second flat portion (e.g. the upper surface of 510b in FIG. 7), arranged, when the device is in the unfolded state, such that a spacing between the first flat portion and the underside of the screen 230 is greater than a spacing between the second flat portion and the underside of the screen 230. At least a portion of the buffer member 511 may be arranged in the space between the first flat portion and the underside of the screen 230. Thus, a thicker buffer member may be used between the first plate part and screen than between the second plate part and screen.

According to various embodiments, a thickness of the first plate part may be smaller than a thickness of the second plate part.

According to various embodiments, the first plate part may be positioned in an edge area of the first hinge plate in the folding axis direction (e.g., a -x-axis direction in FIG. 7A). In other words, the first plate part may be located at an edge of the first hinge plate.

According to various embodiments, the foldable electronic device may further include a first lower layer (e.g., the first digitizer 471 in FIG. 7A) and a second lower layer (e.g., the second digitizer 472 in FIG. 7A) disposed below the flexible display with the folding axis interposed therebetween, in which the buffer member may be disposed to have a spacing distance (e.g., the spacing distance d3 in FIG. 7A) from an end of the first lower layer in a second direction (e.g., direction ② in FIG. 7A) parallel to a surface of the flexible display.

According to various embodiments, the buffer member (e.g., the first buffer member 531 in FIG. 9A) may include a first part (e.g., the first part 531a in FIG. 9A) positioned between the flexible display and the first plate part, and a second part (e.g., the second part 531b in FIG. 9A) positioned between the first plate part and the hinge module.

According to various embodiments, the buffer member (e.g., the first buffer member 531-1 in FIG. 11A) may include a first part (e.g., the first part 531c in FIG. 11A) positioned between the flexible display and the first plate part, and a second part (e.g., the second part 531d in FIG. 11A) positioned on a side surface of the first plate part.

According to various embodiments, the buffer member may include any one of sponge, rubber, urethane, and silicone.

According to various embodiments, the first hinge plate may be connected to the first housing, the hinge assembly may include a second hinge plate (e.g., the second hinge plate 520 in FIG. 7A) connected to the second housing, and no hinge plate may be included and positioned between the first hinge plate and the second hinge plate in the unfolded state.

According to various embodiments, the first plate part may include a first material, and the second plate part may include a second material.

According to various embodiments, the first material may include stainless steel, and the second material may include carbon fiber reinforced plastic (CFRP).

According to various embodiments, a weight per unit area of the first plate part (e.g., the first plate part 530a in FIG. 9A) may be heavier than a weight per unit area of the second plate part (e.g., the second plate part 530b in FIG. 9A).

According to various embodiments, strength of the first plate part may be higher than strength of the second plate part.

According to various embodiments, an area of the first plate part may be narrower than an area of the second plate part.

According to various embodiments, at least a part of the second plate part (e.g., the second plate part 530b in FIG. 9A) may include a recess (e.g., the recess 530c in FIG. 9A), and at least a part of the first plate part may be accommodated in the recess.

According to various embodiments, the foldable electronic device may include woven fabric members (e.g., the first cover layer 514 and the second cover layer 524 in FIG. 7A) attached to the first plate part and the second plate part.

According to various embodiments, the woven fabric member may include a first woven fabric portion positioned between the flexible display and the first plate part, and a second woven fabric portion positioned between the flexible display and the second plate part.

According to various embodiments, the buffer member may be positioned between the woven fabric member and the first plate part.

According to various embodiments, the buffer member and/or the second plate part may be disposed to be in contact with the flexible display.

According to various embodiments, at least a part of the first hinge plate may be disposed to be supported by the arm member.

According to various embodiments, a foldable electronic device may include a first housing (e.g., the first housing 210 in FIG. 9A), a second housing (e.g., the second housing 220 in FIG. 9A), a hinge module (e.g., the hinge module 320 in FIG. 9A) configured to connect the first and second housings so that the first and second housings are foldable about a folding axis (e.g., the folding axis F in FIG. 9A), a flexible display (e.g., the flexible display 230 in FIG. 9A) disposed to be supported by the first and second housings, a first hinge plate (e.g., the first hinge plate 530 in FIG. 8A) disposed below the flexible display so as to be supported by the hinge module and including a first plate part (e.g., the first plate part 530a in FIG. 8A) and a second plate part (e.g., the second plate part 530b in FIG. 8A) extending from the first plate part in a direction away from the folding axis, a second hinge plate (e.g., the second hinge plate in FIG. 8A (e.g., the second hinge plate 540 in FIG. 8A)) disposed below the flexible display so as to be supported by the hinge module and including a third plate part (e.g., the third plate part 540a in FIG. 8A) and a fourth plate part (e.g., the fourth plate part 540b in FIG. 8A) extending from the third plate part in the direction away from the folding axis, a first buffer member (e.g., the first buffer member 531 in FIG. 8A) positioned between the flexible display and the first plate part, and a second buffer member (e.g., the second buffer member 541 in FIG. 8A) positioned between the flexible display and the second plate part, in which a thickness of the first plate part is smaller than a thickness of the second plate part, and in which a thickness of the third plate part is smaller than a thickness of the fourth plate part.

Further, the embodiments of the present disclosure disclosed in the present specification and illustrated in the drawings are provided as particular examples for easily explaining the technical contents according to the embodiment of the present disclosure and helping understand the embodiment of the present disclosure, but not intended to limit the scope of the embodiment of the present disclosure. Accordingly, the scope of the various embodiments of the present disclosure should be interpreted as including all alterations or modifications derived from the technical spirit of the various embodiments of the present disclosure in addition to the disclosed embodiments.

## Claims

1. A foldable electronic device (200) comprising:
a housing comprising a first housing (210) and a second housing (220);
a flexible display (230) supported by the first and second housings; and
a hinge assembly (HA) configured to connect the first and second housings so that the first and second housings are foldable about a folding axis,
wherein the hinge assembly comprises:
a hinge module (320) comprising an arm member (324) configured to rotate about a first rotation axis (X1), and a rotary member (322) configured to rotate about a second rotation axis (X3) different from the first rotation axis;
a first hinge plate (510) comprising a first plate part (510a) configured to at least partially overlap the hinge module, and a second plate part (510b) extending from the first plate part when viewed in a first direction (direction ①) perpendicular to a surface of the flexible display when the foldable electronic device is in an unfolded state; and
a buffer member (511) positioned between the flexible display and the first plate part, and
wherein the first plate part is farther from the flexible display in the first direction than the second plate part from the flexible display.

2. The foldable electronic device of claim 1, wherein a thickness of the first plate part is smaller than a thickness of the second plate part.

3. The foldable electronic device of claim 1 or 2, wherein the first plate part is positioned in an edge area of the first hinge plate in the folding axis direction (-x-axis direction).

4. The foldable electronic device of any one of claims 1 to 3, comprising:
a first lower layer (471) and a second lower layer (472) disposed below the flexible display with the folding axis interposed therebetween,
wherein the buffer member is disposed to have a spacing distance d3 from an end of the first lower layer in a second direction (direction ②) parallel to the surface of the flexible display.

5. The foldable electronic device of any one of claims 1 to 4, wherein the buffer member (531) comprises:
a first part (531a) positioned between the flexible display and the first plate part; and
a second part (531b) positioned between the first plate part and the hinge module.

6. The foldable electronic device of any one of claims 1 to 4, wherein the buffer member (531-1) comprises:
a first part (531c) positioned between the flexible display and the first plate part; and
a second part (531d) positioned on a side surface of the first plate part.

7. The foldable electronic device of any one of claims 1 to 6, wherein the buffer member includes any one of sponge, rubber, urethane, and silicone.

8. The foldable electronic device of any one of claims 1 to 7, wherein the first hinge plate is connected to the first housing,
wherein the hinge assembly comprises a second hinge plate (520) connected to the second housing, and
wherein no hinge plate is included and positioned between the first hinge plate and the second hinge plate in the unfolded state.

9. The foldable electronic device of any one of claims 1 to 8, wherein the first plate part includes a first material, and the second plate part includes a second material.

10. The foldable electronic device of claim 9, wherein the first material includes stainless steel, and the second material includes carbon fiber reinforced plastic (CFRP).

11. The foldable electronic device of any one of claims 1 to 10, wherein a weight per unit area of the first plate part (530a) is heavier than a weight per unit area of the second plate part (530b).

12. The foldable electronic device of any one of claims 1 to 11, wherein strength of the first plate part is higher than strength of the second plate part.

13. The foldable electronic device of any one of claims 1 to 12, wherein an area of the first plate part is narrower than an area of the second plate part.

14. The foldable electronic device of any one of claims 1 to 13, wherein at least a part of the second plate part (530b) includes a recess (530c), and at least a part of the first plate part is accommodated in the recess.

15. The foldable electronic device of any one of claims 1 to 14, comprising:
woven fabric members (514 and 532) attached to the first plate part and the second plate part.
